# EUROPEAN PATENT APPLICATION

(11) **EP 4 796 877 A1**
(43) Date of publication of application: **26.08.2026**
(21) Application number: 24915802.3
(22) Date of filing: 30.10.2024
(51) Int. Cl.: F25D 23/02, F25D 29/00, E05F 15/73, E05F 15/616, G06F 3/044

(54) **REFRIGERATOR AND METHOD FOR CONTROLLING SAME**

(30) Priority: 05.01.2024 KR 20240002524
(71) Applicant: Samsung Electronics Co., Ltd., Suwon-si, Gyeonggi-do 16677 (KR)
(72) Inventor: PARK, Kitae, Suwon-si Gyeonggi-do 16677 (KR); CHOI, Minjeong, Suwon-si Gyeonggi-do 16677 (KR)
(74) Representative: Gulde & Partner
(86) International application number: PCT/KR2024/016798
(87) International publication number: WO 2025/146913

(57) **Abstract**

Disclosed herein are a refrigerator and a method for controlling the same.

In response to receiving a touch signal from a touch sensor disposed on a first door, the refrigerator recognizes whether the first door is in an open state or a closed state based on first detection information received from a first opening and closing sensor, recognizes whether a second door disposed below the first door is in an open state or a closed state based on second detection information received from a second opening and closing sensor, controls a door opening device to move a door pusher from a first position to a second position based on the first door being in the closed state and the second door being in the closed state, and controls the door opening device to maintain the door pusher at the first position based on the first door being in the closed state and the second door being in the open state.

## Description

### [Technical Field]

The disclosure relates to a refrigerator for controlling opening of a door, and a method for controlling the refrigerator.

### [Background Art]

In general, a refrigerator is an apparatus that stores food at a low temperature in a storage compartment shielded by a door.

The refrigerator stores food in the storage compartment in an optimal state by cooling the storage compartment using cold air generated through heat exchange with refrigerant circulating in a refrigeration cycle.

Recent refrigerators include various convenience devices to improve user convenience.

Examples of the convenience devices include a display device that shows images or a list of food stored inside, a door with a transparent window that allows the inside of the storage compartment to be seen without opening the door, and a door opening device that automatically opens the door to based on a user input.

Some convenience devices provide convenience to users, but may also pose safety risks.

For example, a door opening device located on a lower door of a refrigerator may cause the user's foot to collide with the door when it opens automatically.

### [Disclosure]

### [Technical Problem]

An aspect of the disclosure provides a refrigerator that may maintain a position of a door pusher, for opening a first door, at a first position in a case where a second door disposed below the first door is in an open state when a touch signal for opening the first door is received, and a method for controlling the refrigerator.

Another aspect of the disclosure provides a refrigerator that may move a door pusher, for opening a first door, from a first position to a second position, based on an open time of a second door disposed below the first door being greater than or equal to a reference time, when a touch signal for opening the first door is received, and a method for controlling the refrigerator.

### [Technical Solution]

According to an aspect of the disclosure, a refrigerator may include: a main body comprising a storage compartment; a first door provided on the main body; a touch sensor disposed on a lower end of the first door and configured to receive a touch input from a user; a door opening device including a door pusher movable between a first position and a second position and allow the first door to be opened by moving to the second position; a second door provided on the main body and disposed below the first door; a first opening and closing sensor configured to detect an open state and a closed state of the first door; a second opening and closing sensor configured to detect an open state and a closed state of the second door; and a processor configured to: identify a state of the first door and a state of the second door based on first detection information received from the first opening and closing sensor and second detection information received from the second opening and closing sensor in response to receiving a touch signal from the touch sensor, and control the door opening device to maintain the door pusher at the first position based on the first door being in the closed state and the second door being in the open state.

According to an aspect of the disclosure, the processor may be configured to control the door opening device to move the door pusher to the second position, based on the first door being the closed state and the second door being the closed state.

According to an aspect of the disclosure, the refrigerator may further include a position sensor configured to detect an opening angle of the first door. The processor may be configured to: identify the opening angle of the first door based on position information received from the position sensor, and based on the identified opening angle of the first door reaching the target angle, control the door pusher to stop moving.

According to an aspect of the disclosure, the processor may be configured to control the door opening device to move the door pusher to the second position, and control the door opening device to move the door pusher to the first position based on the identified opening angle of the first door reaching the target angle.

According to an aspect of the disclosure, the processor may be configured to measure an open time of the second door based on the second door being in the open state, and control the door pusher to be moveable based on the measured open time reaching a reference time.

According to an aspect of the disclosure, the processor may be configured to, in response to receiving the touch signal from the touch sensor while the measured open time reaches the reference time, control the door opening device to move the door pusher to the second position.

According to an aspect of the disclosure, the processor may be configured to control the door opening device to maintain the door pusher at the first position in response to receiving the touch signal from the touch sensor while the measured open time is less than the reference time.

According to an aspect of the disclosure, the processor may be configured to: monitor the state of the second door based on the second detection information received from the second opening and closing sensor; and based on the monitored state of the second door being the open state, control the door opening device to maintain the door pusher at the first position.

According to an aspect of the disclosure, the processor may be configured to, based on the monitored state of the second door being the closed state, control the door pusher to be moveable.

According to an aspect of the disclosure, the second door may include a handle area provided on an upper end side of the second door. The handle area may include a groove portion recessed downward from the upper end side of the second door, and a wall portion forming a wall surface of the groove portion. The groove portion may be positioned on the upper end side of the second door to face the touch sensor of the first door based on the first door and the second door being in the closed state. The wall portion may be positioned on the upper end side of the second door to face the touch sensor based on the first door being in the closed state and the second door transitioning from the closed state to the open state.

According to an aspect of the disclosure, the touch sensor may include a capacitance sensor configured to detect capacitance.

According to an aspect of the disclosure, the wall portion of the upper end side of the second door may be made of a conductive material.

According to an aspect of the disclosure, the refrigerator may further include a display configured to display information about an automatically openable state and an automatically non-openable state of the first door.

According to another aspect of the disclosure, a method for controlling a refrigerator may include: based on receiving a touch signal from a touch sensor disposed on a first door, identifying whether the first door is in an open state or a closed state based on first detection information received from a first opening and closing sensor; identifying whether a second door disposed below the first door is in an open state or a closed state based on second detection information received from a second opening and closing sensor; based on the first door being in the closed state and the second door being in the closed state, controlling a door opening device to move a door pusher from a first position to a second position; and based on the first door being in the closed state and the second door being in the open state, controlling the door opening device to maintain the door pusher at the first position.

The controlling of the door opening device to move the door pusher from the first position to the second position may include: controlling a driving motor connected to the door pusher to allow a rotational force of the driving motor to be transmitted to the door pusher.

The controlling of the door opening device may include: identifying an opening angle of the first door based on position information received from a position sensor; and based on the identified opening angle of the first door reaching a target angle. moving the door pusher toward the first position.

The method may further include: measuring an open time of the second door based on the identified second door being in the open state; and controlling the door pusher to be moveable based on the measured open time reaching a reference time.

The controlling of the door pusher to be moveable may include based on receiving the touch signal from the touch sensor, moving the door pusher from the first position to the second position.

The method may further include: based on the receiving the touch signal from the touch sensor while the measured open time is less than the reference time maintaining the door pusher at the first position.

The method may include: monitoring a state of the second door based on the second detection information received from the second opening and closing sensor; based on the monitored state of the second door being the open state, controlling the door pusher to be maintained at the first position; and based on the monitored state of the second door being the closed state, controlling the door pusher to be moveable.

### [Advantageous Effects]

According to the disclosure, a touch sensor may be disposed on a lower end side of a first door disposed at an upper portion of a refrigerator, thereby improving accuracy of detection of a touch signal for opening the first door.

According to the disclosure, user convenience may be improved by automatically opening the first door disposed at the upper portion of the refrigerator.

According to the disclosure, in a case where a second door disposed at a lower portion of the refrigerator is in a closed state when a touch signal for automatically opening the first door is received, the first door may be prevented from being automatically opened by fixing a position of a door pusher that applies physical force to the first door at a first position.

According to the disclosure, signal interference caused by opening of the second door between the second door and the touch sensor disposed on the first door may be prevented. Accordingly, malfunction of the touch sensor on the first door may be prevented, and the first door may be prevented from being opened regardless of the user's intention. Furthermore, a safety accident in which a user bumps into the first door due to unintended opening of the first door may be prevented.

According to the disclosure, the second door disposed at the lower portion of the refrigerator may be manually opened or closed, thereby preventing a safety accident in which a user bumps into the second door.

According to the disclosure, safety, quality, and marketability of the refrigerator may be improved, and competitiveness of the refrigerator may be enhanced.

### [Description of Drawings]

FIG. 1 is a front view illustrating a state in which doors of a refrigerator are closed according to an embodiment of the disclosure.
FIG. 2 is a perspective view illustrating a state in which doors of a refrigerator are opened according to an embodiment of the disclosure.
FIG. 3 is a top view illustrating a state in which some components of a refrigerator are viewed from above according to an embodiment of the disclosure.
FIG. 4 is an enlarged view illustrating a main body, a right door, and a door opening device provided to open the right door, when the right door of a refrigerator is closed according to an embodiment of the disclosure.
FIG. 5 is a view illustrating a state in which a right door is opened by a door opening device of a refrigerator according to an embodiment of the disclosure.
FIG. 6 is a view illustrating a touch sensor provided on a door of a refrigerator according to an embodiment of the disclosure.
FIG. 7 is a cross-sectional view illustrating some components of a door, such as a door panel, a lower cap, and a touch sensor according to an embodiment of the disclosure.
FIG. 8 is a view illustrating a printed circuit board and a conductor of a touch sensor of a refrigerator viewed from below according to an embodiment of the disclosure.
FIG. 9 is a control block diagram of a refrigerator according to an embodiment of the disclosure.
FIG. 10A and FIG. 10B are views illustrating a change in distance between a touch sensor and a second door corresponding to states of first and second doors of a refrigerator according to an embodiment of the disclosure.
FIG. 11 is a flowchart of a method for controlling a refrigerator according to an embodiment of the disclosure.
FIG. 12 is a control block diagram of a refrigerator according to another embodiment of the disclosure.
FIG. 13 is a flowchart of a method for controlling a refrigerator according to another embodiment of the disclosure.

### [Modes of the Invention]

Various embodiments and the terms used therein are not intended to limit the technology disclosed herein to specific forms, and the disclosure should be understood to include various modifications, equivalents, and/or alternatives to the corresponding embodiments.

In describing the drawings, similar reference numerals may be used to designate similar constituent elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

As used herein, the term "and/or" includes any and all combinations of one or more of the associated listed items.

Terms such as "1st", "2nd", "primary", or "secondary" may be used simply to distinguish an element from other elements, without limiting the element in other aspects (e.g., importance or order).

Further, as used in the disclosure, the terms "front", "rear", "top", "bottom", "side", "left", "right", "upper", "lower", and the like are defined with reference to the drawings, and are not intended to limit the shape and position of any element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

A refrigerator according to an embodiment of the disclosure may include a main body.

The "main body" may include an inner case, an outer case positioned outside the inner case, and an insulation provided between the inner case and the outer case.

The "inner case" may include a case, a plate, a panel, or a liner forming a storage compartment (also referred to as a storage room). The inner case may be formed as one body, or may be formed by assembling a plurality of plates together. The "outer case" may form an appearance of the main body, and be coupled to an outer side of the inner case such that the insulation is positioned between the inner case and the outer case.

The "insulation" may insulate an inside of the storage compartment from an outside of the storage compartment to maintain inside temperature of the storage compartment at appropriate temperature without being influenced by an external environment of the storage compartment. According to an embodiment of the disclosure, the insulation may include a foaming insulation. The foaming insulation may be molded by fixing the inner case and the outer case with jigs, etc., and then injecting and foaming urethane foam as a mixture of polyurethane and a foaming agent between the inner case and the outer case.

According to an embodiment of the disclosure, the insulation may include a vacuum insulation in addition to a foaming insulation, or may be configured only with a vacuum insulation instead of a foaming insulation. The vacuum insulation may include a core material and a cladding material accommodating the core material and sealing the inside with vacuum or pressure close to vacuum. However, the insulation is not limited to the above-mentioned foaming insulation or vacuum insulation, and may include various materials capable of being used for insulation.

The "storage compartment" may include a space defined by the inner case. The storage compartment may further include the inner case defining the space corresponding to the storage compartment. The storage compartment may store a variety of items, such as food, medicines, cosmetics, and the like, and the storage compartment may be configured to be open on at least one side for insertion and removal of the items.

The refrigerator may include one or more storage compartments. In a case in which two or more storage compartments are formed in the refrigerator, the respective storage compartments may have different purposes of use, and may be maintained at different temperatures. To this end, the respective storage compartments may be partitioned by a partition wall including an insulation.

The storage compartment may be maintained within an appropriate temperature range according to a purpose of use, and may include a "refrigerating compartment", a "freezing compartment", and a "temperature conversion compartment" according to purposes of use and/or temperature ranges. The refrigerating compartment may be maintained at an appropriate temperature to keep food refrigerating, and the freezing compartment may be maintained at an appropriate temperature to keep food frozen. The "refrigerating" may be keeping food cold without freezing the food, and for example, the refrigerating compartment may be maintained within a range of 0 degrees Celsius to 5 degrees Celsius. The "freezing" may be freezing food or keeping food frozen, and for example, the freezing compartment may be maintained within a range of -23 degrees Celsius to -17 degrees Celsius. The temperature conversion compartment may be used as either a refrigerating compartment or a freezing compartment according to or regardless of a user's selection.

The storage compartment may also be referred to by various terms, such as "vegetable compartment", "freshness compartment", "cooling compartment", and "ice-making compartment", in addition to "refrigerating compartment", "freezing compartment", and "temperature conversion compartment", and the terms, such as "refrigerating compartment", "freezing compartment", "temperature conversion compartment", etc., as used below are to be understood as representing storage compartments having the corresponding purposes of use and the corresponding temperature ranges.

The refrigerator according to an embodiment of the disclosure may include at least one door configured to open or close the open side of the storage compartment. The respective doors may be provided to open and close one or more storage compartments, or a single door may be provided to open and close a plurality of storage compartments. The door may be rotatably or slidably mounted to the front of the main body.

The "door" may seal the storage compartment in a closed state. The door, like the main body, may include an insulation to insulate the storage compartment in a closed state.

According to an embodiment, the door may include an outer door plate forming the front surface of the door, an inner door plate forming the rear surface of the door and facing the storage compartment, an upper cap, a lower cap, and a door insulation provided therein.

A gasket may be provided on the edge of the inner door plate to seal the storage compartment by coming into close contact with the front surface of the main body when the door is closed. The inner door plate may include a dyke that protrudes rearward to allow a door basket for storing items to be fitted.

According to an embodiment, the door may include a door body and a front panel that is detachably coupled to the front of the door body and forming the front surface of the door. The door body may include an outer door plate forming the front surface of the door body, an inner door plate forming the rear surface of the door body and facing the storage compartment, an upper cap, a lower cap, and a door insulator provided therein.

The refrigerator may be classified as French Door Type, Side-by-side Type, Bottom Mounted Freezer (BMF), Top Mounted Freezer (TMF), or Single Door Refrigerator according to the arrangement of the doors and the storage compartments.

The refrigerator according to an embodiment of the disclosure may include a cold air supply device for supplying cold air to the storage compartment.

The "cold air supply device" may include a machine, an apparatus, an electronic device, and/or a combination system thereof, capable of generating cold air and guiding the cold air to cool the storage compartment.

According to an embodiment of the disclosure, the cold air supply device may generate cold air through a cooling cycle including compression, condensation, expansion, and evaporation processes of refrigerants. To this end, the cold air supply device may include a refrigeration cycle device having a compressor, a condenser, an expander, and an evaporator to drive the refrigeration cycle. According to an embodiment of the disclosure, the cold air supply device may include a semiconductor, such as a thermoelectric element. The thermoelectric element may cool the storage compartment by heating and cooling actions through the Peltier effect.

The refrigerator according to an embodiment of the disclosure may include a machine compartment in which at least some components belonging to the cold air supply device are installed.

The "machine compartment" may be partitioned and insulated from the storage compartment to prevent heat generated by the components installed in the machine compartment from being transferred to the storage compartment. To dissipate heat from the components installed in the machine compartment, the machine compartment may communicate with outside of the main body.

The refrigerator according to an embodiment of the disclosure may include a dispenser provided on the door to provide water and/or ice. The dispenser may be provided on the door to allow access by the user without opening the door.

The refrigerator according to an embodiment of the disclosure may include an ice-making device that produces ice. The ice-making device may include an ice-making tray that stores water, an ice-moving device that separates ice from the ice-making tray, and an ice-bucket that stores ice produced in the ice-making tray.

The refrigerator according to an embodiment of the disclosure may include a controller for controlling the refrigerator.

The "controller" may include a memory for storing and/or recording data and/or programs for controlling the refrigerator, and a processor for outputting control signals for controlling the cold air supply device, etc., in accordance with the programs and/or data stored in the memory.

The memory may store or record various information, data, instructions, programs, and the like necessary for operation of the refrigerator. The memory may store temporary data generated while generating control signals for controlling components included in the refrigerator. The memory may include at least one of a volatile memory or a non-volatile memory, or a combination thereof.

The processor may control the overall operation of the refrigerator. The processor may control the components of the refrigerator by executing programs stored in memory. The processor may include a separate neural processing unit (NPU) that performs an artificial intelligence (AI) model operation. In addition, the processor may include a central processing unit (CPU), a graphics processor (GPU), and the like. The processor may generate a control signal to control the operation of the cold air supply device. For example, the processor may receive temperature information of the storage compartment from a temperature sensor and generate a cooling control signal to control an operation of the cold air supply device based on the temperature information of the storage compartment.

Furthermore, the processor may process a user input of a user interface and control an operation of the user interface in accordance with the programs and/or data recorded/stored in the memory. The user interface may be provided with an input interface and an output interface. The processor may receive the user input from the user interface. In addition, the processor may transmit a display control signal and image data for displaying an image on the user interface to the user interface in response to the user input.

The processor and memory may be provided integrally or may be provided separately. The processor may include one or more processors. For example, the processor may include a main processor and at least one sub-processor. The memory may include one or more memories.

The refrigerator according to an embodiment of the disclosure may include a processor and a memory for controlling all of the components included in the refrigerator, and may include a plurality of processors and a plurality of memories for individually controlling the components of the refrigerator. For example, the refrigerator may include a processor and a memory for controlling the operation of the cold air supply device in accordance with to an output of the temperature sensor. In addition, the refrigerator may be separately provided with a processor and a memory for controlling the operation of the user interface in accordance with the user input.

A communication module may communicate with external devices, such as servers, mobile devices, and other home appliances via a nearby access point (AP). The AP may connect a local area network (LAN) to which a refrigerator or a user device is connected to a wide area network (WAN) to which a server is connected. The refrigerator or the user device may be connected to the server via the WAN.

The input interface may include keys, a touch screen, a microphone, and the like. The input interface may receive the user input and pass the received user input to the processor.

The output interface may include a display, a speaker, and the like. The output interface may output various notifications, messages, information, and the like generated by the processor.

Hereinafter, a refrigerator according to various embodiments of the disclosure is described in detail with reference to the accompanying drawings.

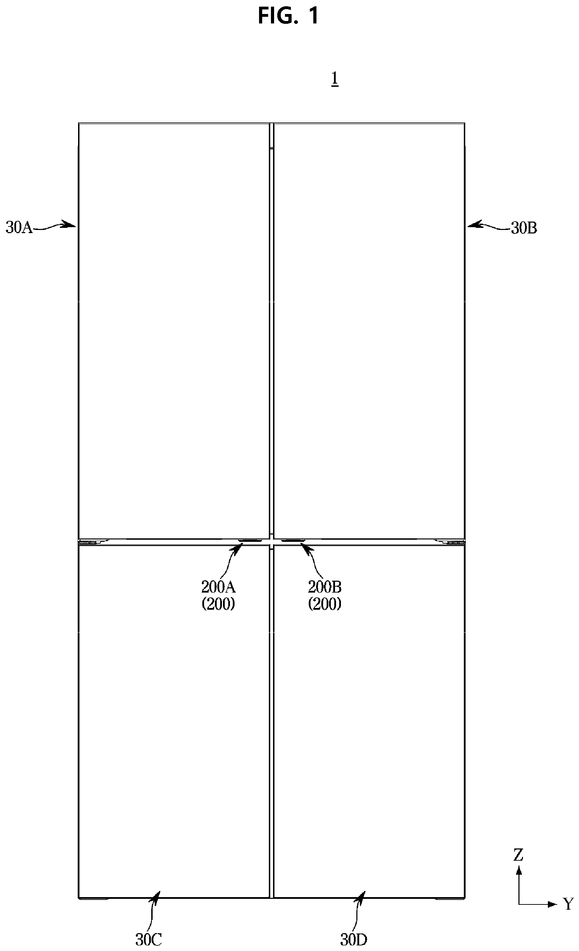

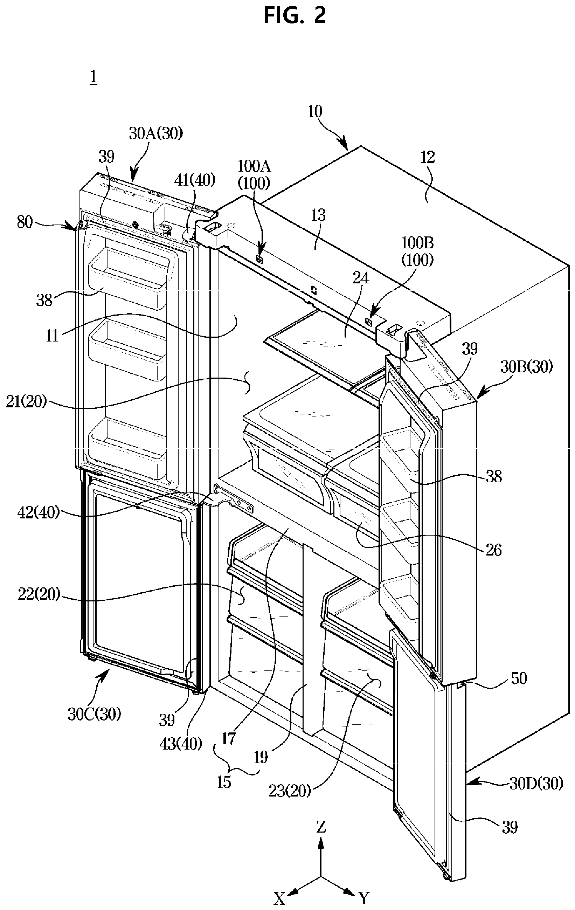

FIG. 1 is a front view illustrating a state in which doors of a refrigerator are closed according to an embodiment of the disclosure. FIG. 2 is a perspective view illustrating a state in which the doors of the refrigerator are opened according to an embodiment of the disclosure.

As shown in FIG. 1, a refrigerator 1 according to an embodiment of the disclosure may include a plurality of doors 30A, 30B, 30C, and 30D, and a touch sensor 200 disposed on some of the plurality of doors to detect a user's touch input for automatic opening of some doors.

Here, one or more touch sensors 200 may be provided. For example, the refrigerator 1 according to an embodiment of the disclosure may include a first touch sensor 200A disposed on the first door 30A among the upper doors to detect a user's touch input for automatic opening of the first door 30A, and a second touch sensor 200B disposed on the second door 30B among the upper doors to detect a user's touch input for automatic opening of the second door 30B. A specific configuration of such a refrigerator is described with reference to FIG. 2.

As shown in FIG. 2, the refrigerator 1 according to an embodiment of the disclosure may include a main body 10, a storage compartment 20 inside the main body 10, a door 30 for opening and closing the storage compartment 20, and a cooling system for supplying cold air to the storage compartment 20.

The main body 10 may include an inner case 11 forming the storage compartment 20 and an outer case 12 forming the exterior of the refrigerator 1.

The outer case 12 may be formed to have a shape of a box with a substantially open front. The outer case 12 may form an upper surface, a lower surface, left and right side surfaces, a rear surface, and the like of the refrigerator 1.

The inner case 11 may be open at the front. The inner case 11 may have the storage compartment 20 therein and may be provided inside the outer case 12. An inner wall of the inner case 11 may form an inner wall of the storage compartment 20.

A main body insulation may be provided between the outer case 12 and the inner case 11 of the main body 10 so that the outer case 12 and the inner case 11 are insulated from each other. The main body insulation may be foamed between the inner case 11 and the outer case 12 to couple the inner case 11 and the outer case 12 to each other. The main body insulation may prevent heat exchange from occurring between the inside of the storage compartment 20 and the outside of the main body 10, thereby improving cooling efficiency inside the storage compartment 20. As the main body insulation in the main body 10, urethane foam insulation, expanded polystyrene (EPS) insulation, a vacuum insulation panel, or the like may be used. However, the disclosure is not limited thereto, and the main body insulation may be configured to include various materials.

The main body 10 may further include a top table 13 located on the upper portion of the main body 10. Specifically, the top table 13 may be coupled to the upper portion of the outer case 12. The top table 13 may be coupled to the upper side of the outer case 12.

The top table 13 may cover various electronic components. An accommodation space for accommodating various electronic components may be formed inside the top table 13. As a more specific example, the top table 13 may cover a door opening device 100 to be described later, and the door opening device 100 may be accommodated in the top table 13.

The storage compartment 20 may be provided inside the main body 10. For example, the storage compartment 20 may include a refrigerating compartment maintained at approximately 0 to 5 degrees Celsius to store food in a refrigerated state. For example, the storage compartment 20 may include a freezing compartment maintained at approximately minus 30 to 0 degrees Celsius to store food in a frozen state.

For example, the storage compartment 20 may be divided into a plurality of areas by a partition 15. Specifically, the storage compartment 20 may be divided into an upper first storage compartment 21 and lower storage compartments 22 and 23 by a first partition 17 extending in the horizontal direction.

In addition, the lower storage compartments 22 and 23 of the storage compartment 20 may be divided into the left second storage compartment 22 and the right third storage compartment 23 by a second partition 19 extending in a vertical direction. In this case, for example, the first storage compartment 21 may be used as a refrigerating compartment, and the second storage compartment 22 and the third storage compartment 23 may both be used as freezing compartments. Alternatively, one of the two may be used as a freezing compartment and the other may be used as a refrigerating compartment.

The division method of the storage compartment 20 described above and the use of each of the divided storage compartments 21, 22, and 23 are merely an example and are not limited thereto.

Inside the storage compartment 20, a shelf 24 on which food may be placed and a storage container 26 for storing food may be provided.

The refrigerator 1 may include a cooling system to generate cold air using a cooling cycle and supply the generated cold air to the storage compartment 20. The cooling system may generate cold air using a refrigeration circulation cycle that compresses, condenses, expands, and evaporates refrigerant. For example, the cooling system may include a compressor, a condenser, an expansion valve, an evaporator, a blowing fan, and the like. The cold air generated by the cooling system may be supplied to the storage compartment 20 through a cold air supply duct formed at a rear portion of the inner case 11.

The door 30 may open and close the storage compartment 20. The door 30 may open and close an opening formed on one side of the main body 10. The door 30 may be rotatable with respect to the main body 10.

An outer side of the door 30 may form a part of the exterior of the refrigerator 1. In a position where the door 30 is closed, the outer side of the door 30 may form at least a part of the front exterior of the refrigerator 1. In a state where the door 30 is closed, an inner side of the door 30 may face the inside of the storage compartment 20. The inner side of the door 30 refers to one surface of the door 30 that faces the storage compartment 20 while the door 30 is closing the storage compartment 20. In addition, the outer side of the door 30 refers to the other surface opposite to the inner side of the door 30 that faces the storage compartment 20 while the door 30 is closing the storage compartment 20, and refers to the front surface of the door 30 that is visible when the refrigerator 1 is viewed from the front.

A door basket 38 for storing food may be disposed on the inner side of the door 30. A door gasket 39 may be provided on the inner side of the door 30 to seal a gap between the door 30 and the main body 10 to prevent leakage of cold air from the storage compartment 20.

The refrigerator 1 may include an upper door and a lower door arranged parallel to each other in the vertical direction Z. The refrigerator 1 may include a left door and a right door arranged parallel to each other in the horizontal direction Y. The refrigerator 1 may include a plurality of doors 30A, 30B, 30C, and 30D for opening and closing each of the divided storage compartments 21, 22, and 23.

The first storage compartment 21 may be opened and closed by a pair of upper doors 30A and 30B. The refrigerator 1 may include the first door 30A that opens and closes a portion of the first storage compartment 21, and the second door 30B that opens and closes another portion of the first storage compartment 21. The first door 30A and the second door 30B may be rotatable independently of each other with respect to the main body 10. The first door 30A and the second door 30B may be arranged parallel to each other in the horizontal direction (Y direction). For example, the first door 30A may open and close the left portion of the first storage compartment 21, and the second door 30B may open and close the right portion of the first storage compartment 22.

A rotating bar 80 may be provided on one of the pair of upper doors 30A and 30B (for example, the first door 30A). The rotating bar 80 may be rotatable with respect to the one door and may cover a gap between the pair of upper doors 30A and 30B when the pair of upper doors 30A and 30B closes the first storage compartment 21.

The second storage compartment 22 may be opened and closed by the left lower door 30C. The refrigerator 1 may include the third door 30C provided to open and close the second storage compartment 22. The third door 30C may be rotatable with respect to the main body 10. For example, the first door 30A and the third door 30C may be arranged parallel to each other in the vertical direction Z.

The third storage compartment 23 may be opened and closed by the right lower door 30D. The refrigerator 1 may include the fourth door 30D provided to open and close the third storage compartment 23. The fourth door 30D may be rotatable with respect to the main body 10. For example, the second door 30B and the fourth door 30D may be arranged parallel to each other in the vertical direction Z. In addition, the third door 30C and the fourth door 30D may be arranged parallel to each other in the horizontal direction Y.

A handle may be provided on each of the plurality of doors 30A, 30B, 30C, and 30D. A user may open or close each of the doors 30A, 30B, 30C, and 30D by holding the handle provided on each of the plurality of doors 30A, 30B, 30C, and 30D. In other words, a user may open or close each storage compartment 21, 22, and 23 by holding the handle provided on each. For example, the handle provided on each of the plurality of doors 30A, 30B, 30C, and 30D may have a groove concavely formed to be gripped.

The handles provided on the third door 30C and the fourth door 30D are described below as an example.

A portion of the upper end side of the third door 30C may include a handle area 50.

The portion of the upper end side of the third door 30C may be a right side of the upper end side of the third door 30C. The right side of the upper end side of the third door 30C may be a surface corresponding to a central area of the main body 10 of the refrigerator.

A front of the handle area 50 of the third door 30C may include a groove portion recessed downward by a predetermined length from the upper end side of the third door. The depth of the groove portion of the third door 30C may become deeper from the front toward the rear.

A rear of the handle area of the third door 30C may be at the same height as the upper end side of the third door 30C. The rear of the handle area of the third door 30C may include a wall portion forming the wall surface of the groove portion.

Here, the front may be a direction corresponding to the door panel on the outer side of the door, and the rear may be a direction corresponding to the inner side of the door.

A user may insert their hand into the groove portion 50 of the third door 30C. The user may open the third door 30C by putting their hand into the groove portion 50 and then pulling the third door 30C.

The upper end side of the third door 30C may be made of a conductive material. That is, the wall portion of the upper end side of the third door 30C may be made of a conductive material.

A portion of the upper end side of the fourth door 30D may include the handle area 50.

The portion of the upper end side of the fourth door 30D may be a left side of the upper end side of the fourth door 30D. The left side of the upper end side of the fourth door 30D may be the surface corresponding to the central area of the main body 10 of the refrigerator.

The front of the handle area 50 of the fourth door 30D may include a groove portion recessed downward by a predetermined length from the upper end side of the fourth door 30D. The depth of the groove portion of the fourth door 30D may become deeper from the front toward the rear.

The rear of the handle area of the fourth door 30D may be at the same height as the upper end side of the fourth door 30D. The rear of the handle area of the fourth door 30D may include a wall portion forming the wall surface of the groove portion.

Here, the front may be a direction corresponding to the door panel on the outer side of the door, and the rear may be a direction corresponding to the inner side of the door, i.e., the direction in which the storage compartment is formed.

A user may insert their hand into the groove portion 50 of the fourth door 30D. The user may open the fourth door 30D by putting their hand into the groove portion 50 and then pulling the fourth door 30D.

The upper end side of the fourth door 30D may be made of a conductive material. That is, the wall portion of the upper end side of the fourth door 30D may be made of a conductive material.

As will be described later, the upper door may be opened by the door opening device 100. For example, the first door 30A may be opened by a first door opening device 100A disposed on the left side. For example, the second door 30B may be opened by a second door opening device 100B disposed on the left side.

As will be described later, the upper door may include the touch sensor 200 that receives a touch input for operating the door opening device 100. For example, the first door 30A may include the first touch sensor 200A that receives a touch input for operating the first door opening device 100A. For example, the second door 30B may include the second touch sensor 200B that receives a touch input for operating the second door opening device 100B.

The refrigerator 1 may include a hinge 40 that connects the main body 10 and the door 30. The hinge 40 may allow the door 30 to be rotatable with respect to the main body 10.

The hinge 40 may be fixed to the main body 10. Specifically, the hinge 40 may be coupled to the outer case 12.

The hinge 40 may rotatably support the door 30. The door 30 may be rotatably coupled to the main body 10 by the hinge 40.

Specifically, the refrigerator 1 may include a plurality of hinges 41, 42, and 43 to support each of the plurality of doors 30A, 30B, 30C, and 30D. For example, the refrigerator 1 may include a pair of upper door hinges 41 coupled to an upper portion of the main body 10 to rotatably support the first door 30A and the second door 30B, respectively. In addition, for example, the refrigerator 1 may include a pair of lower door hinges 43 coupled to a lower portion of the main body 10 to rotatably support the third door 30C and the fourth door 30D, respectively. In addition, for example, the refrigerator 1 may include a pair of middle hinges 42 disposed between the upper door hinge 41 and the lower door hinge 43, and coupled to a middle portion of the main body 10 (specifically, to the first partition 17) to rotatably support each of the first door 30A, the second door 30B, the third door 30B, and the fourth door 30D.

The configuration of the refrigerator 1 described above with reference to FIG. 1 and FIG. 2 is merely an example for describing the refrigerator according to an aspect of the disclosure, and the disclosure is not limited thereto.

In addition, although the refrigerator 1 according to an embodiment of the disclosure has been described as an example of the disclosure on the premise that the refrigerator 1 is an indirect cooling refrigerator, the disclosure is not limited thereto, and may be applied to a direct cooling refrigerator.

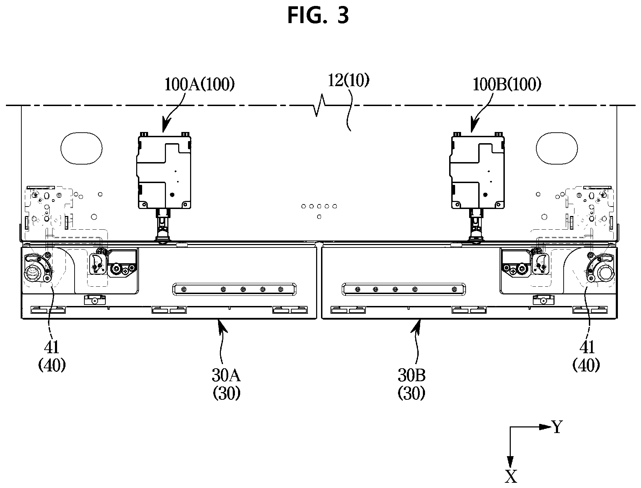

Hereinafter, a door opening device provided in the refrigerator according to an embodiment of the disclosure is described in detail with reference to FIG. 3 to FIG. 5.

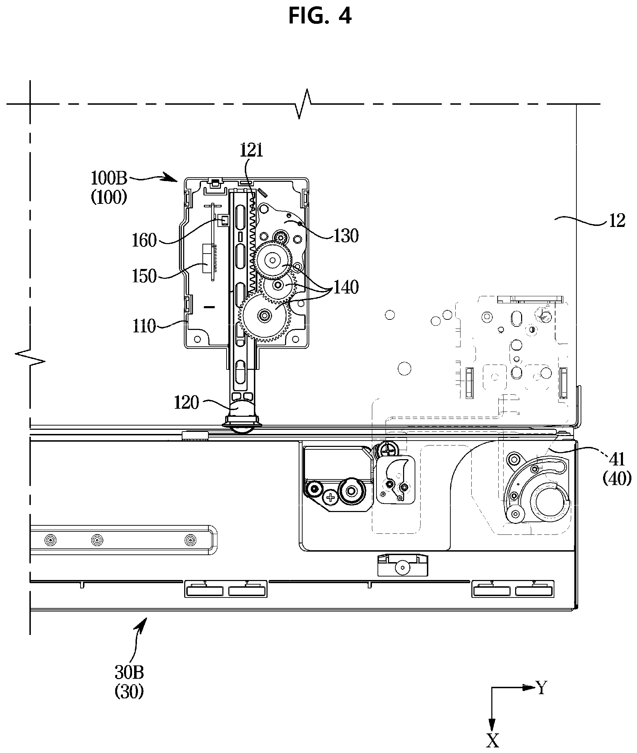

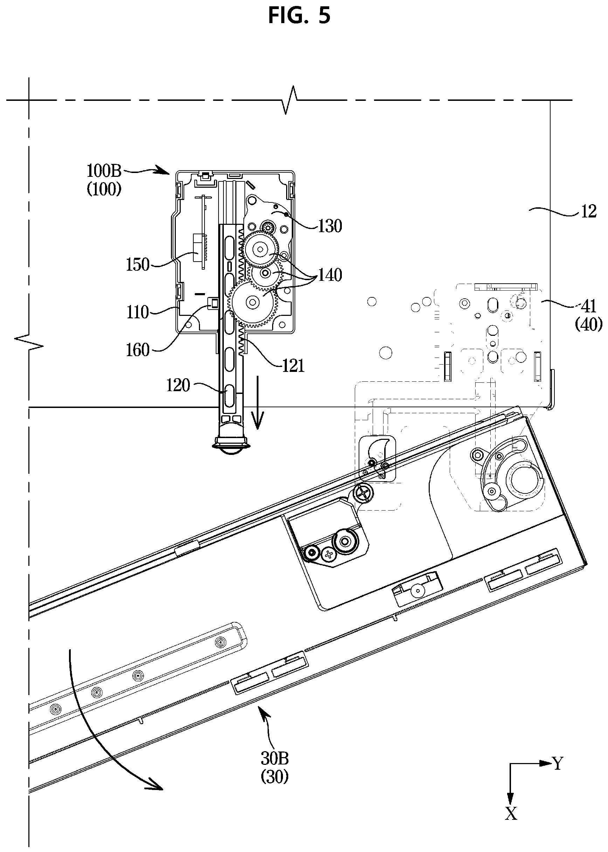

FIG. 3 is a top view illustrating a state in which some components of the refrigerator are viewed from above according to an embodiment of the disclosure. FIG. 4 is an enlarged view illustrating the main body, the right door, and the door opening device provided to open the right door when the right door of the refrigerator is closed according to an embodiment of the disclosure. FIG. 5 is a view illustrating a state in which the right door is opened by the door opening device of the refrigerator according to an embodiment of the disclosure.

As shown in FIG. 3, the refrigerator 1 may include the door opening device 100 disposed on the main body 10, specifically on the upper portion of the main body 10, to automatically open the door 30.

The door opening device 100 may be accommodated in the top table 13. The upper side of the door opening device 100 may be covered by the top table 13. The door opening device 100 may be disposed on the upper surface of the outer case 12.

The door opening device 100 may rotate the door 30 with respect to the main body 10 to open the storage compartment 20. The door opening device 100 may press the door 30 so that the door 30 rotates about the hinge 40 as an axis.

The door opening device 100 of the refrigerator of the disclosure may automatically open the first storage compartment 21. One or more door opening device 100 may be provided.

The first door opening device 100A and the second door opening device 100B may be arranged parallel to each other in the horizontal direction Y.

More specifically, the refrigerator 1 may include the first door opening device 100A disposed on a left side of a center on the upper portion of the main body 10 to automatically open the first door 30A, and the second door opening device 100B disposed on the right side of the center on the upper portion of the main body 10 to automatically open the second door 30B.

The first door opening device 100A may press the first door 30A, specifically the upper portion of the first door 30A, and the second door opening device 100B may press the second door 30B, specifically the upper portion of the second door 30B.

The first door opening device 100A may open a portion of the first storage compartment 21. The second door opening device 100B may open another portion of the first storage compartment 21.

The first door opening device 100A and the second door opening device 100B may independently open the first door 30A and the second door 30B, respectively.

The structures of first door opening device 100A and the second door opening device 100B may correspond to each other, and the structure of the second door opening device 100B may be applied to the first door opening device 100A.

Accordingly, the structures of the first door opening device 100A and the second door opening device 100B are described as the structure of the door opening device 100 with reference to FIG. 4 and FIG. 5.

As shown in FIG. 4 and FIG. 5, the door opening device 100 may include a door pusher 120 that presses the door 30 to open the door 30. The door pusher 120 may press the door 30 while moving with respect to the main body 10. Specifically, the door pusher 120 may move forward from the main body 10 toward the door 30 to press the door 30, thereby opening the door 30 from a closed state. The door pusher 120 may be linearly reciprocable with respect to the main body 10. The door pusher 120 may be linearly movable in a front-rear direction X with respect to the main body 10. Alternatively, the door pusher 120 may move non-linearly with respect to the main body 10.

The door pusher 120 may apply physical force to the door 30 while moving from a first position to a second position.

Here, the first position may be a position of the door pusher 120 when the door 30 is closed. The first position may be the position when the door pusher 120 is positioned within the main body.

The second position may be a position of the door pusher 120 when the door 30 is opened to a target angle.

The door pusher 120 may move from the second position back to the first position when the door is completely opened. That is, the door pusher 120 may return to the original position.

In the embodiment, described is a case where the door pusher 120 is provided on the main body and the door pusher provided on the main body applies physical force to the door while moving from the first position to the second position.

However, the door pusher 120 may also be provided on the door, and the door may be opened by physical force of the door pusher while the door pusher provided on the door moves from the first position to the second position.

The door opening device 100 may include a pusher case 110 that supports the door pusher 120. The pusher case 110 may movably support the door pusher 120. The pusher case 110 may form a space for accommodating at least a portion of the door pusher 120.

The pusher case 110 may be fixedly provided on the main body 10. For example, the pusher case 110 may be coupled to the top table 13.

The door opening device 100 may include a power source 130 that generates power for opening the door 30. The power source 130 may generate power for the door pusher 120 to move.

For example, the power source 130 may include a driving motor and a motor driver connected to the driving motor. The driving motor may generate power by receiving driving current from the motor driver. The motor driver may be electrically connected to a processor of the refrigerator 1, and may operate based on a control signal received from the processor. That is, the power source 130 may be controlled by the processor of the refrigerator 1. The power source 130 may be supported by the pusher case 110. The power source 130 may be accommodated in the pusher case 110.

The door opening device 100 may include a power transmission member 140 that transmits the power generated by the power source 130 to the door pusher 120.

For example, the power transmission member 140 may include at least one gear or a plurality of gears. The door pusher 120 may include a pusher gear portion 121 configured to mesh with the power transmission member 140, and the door pusher 120 may receive power from the gear of the power transmission member 140 through the pusher gear portion 121. For example, the power transmission member 140 and the pusher gear portion 121 may form a rack-and-pinion gear structure.

The power transmission member 140 may be supported by the pusher case 110. The power transmission member 140 may be accommodated in the pusher case 110.

The door opening device 100 may include a position sensor 150 that detects a position of the door pusher 120. The position sensor 150 may detect the position of the door pusher 120 in various ways. For example, the position sensor 150 may include various types of magnetic field sensors, such as a Hall sensor that detects the magnetic field of a magnet 160 mounted on the door pusher 120. The processor may control the power source 130 to move or stop the door pusher 120 based on an electrical signal received from the position sensor 150. For example, the position sensor 150 may be supported by the pusher case 110. The position sensor 150 may be accommodated in the pusher case 110.

The door opening device 100 may operate based on a door opening signal from the processor. The door opening signal for opening the door 30 may be generated by a user input. The user input may include a touch input received through the touch sensor 200.

The touch sensor 200 may receive a touch input corresponding to a user's touch for operating the door opening device 100.

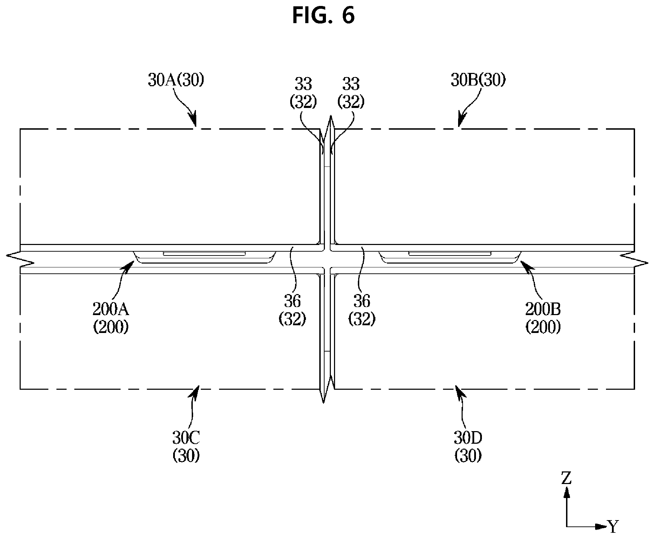

The configuration of the door equipped with the touch sensor is described with reference to FIG. 6.

FIG. 6 is a view illustrating the touch sensor provided on the door of the refrigerator according to an embodiment of the disclosure.

As shown in FIG. 6, the door 30 may include the touch sensor 200 disposed at a lower portion of the door 30, specifically disposed at a lower portion of the door body 32. The touch sensor 200 may also be disposed on a lower cap 36 of the door.

The touch sensor 200 may generate a touch signal by a user touching a portion of the touch sensor 200 or positioning a user's body part (e.g., hand, etc.) in close proximity thereto. The door opening device 100 may be operated by the touch signal. That is, the touch signal may be a signal for operating the power source 130 to move the door pusher 120 in a direction to press the door 30.

The touch sensor 200 may include a capacitance sensor that detects a change in capacitance due to the user's touch.

As such, by disposing the touch sensor 200 at the lower end of the door 30, a user may provide a touch input to the touch sensor 200 through a natural and simple action performed for opening the door 30, such as holding the lower portion of the door body 32 with a hand.

Furthermore, even without prior instruction such as a manual for the method of inputting touch to the touch sensor 200, the user may easily learn the method of providing touch input to operate the door opening device 100 during normal use. Due to the above-described arrangement of the touch sensor 200, the touch sensor 200 may receive the touch input for opening the door 30 more efficiently, and thus user convenience may be improved.

The touch sensor 200 may be disposed on each of the first door 30A and the second door 30B.

The touch sensor 200 may include the first touch sensor 200A that generates a touch signal for operating the first door opening device 100A to open the first door 30A, and the second touch sensor 200B that generates a touch signal for operating the second door opening device 100B to open the second door 30B.

The first touch sensor 200A and the second touch sensor 200B may be arranged at corresponding heights. The first touch sensor 200A and the second touch sensor 200B may be arranged parallel to each other in a horizontal direction.

The first touch sensor 200A and the second touch sensor 200B may be disposed adjacent to the center of the refrigerator 1.

The first touch sensor 200A may be disposed adjacent to a right end of the first door 30A. The second touch sensor 200B may be disposed adjacent to a left end of the second door 30B.

As the first touch sensor 200A and the second touch sensor 200B are arranged adjacent to the center of the refrigerator 1, a user's touch input may be received more efficiently.

The first touch sensor 200A may be positioned above the third door 30C disposed below the first door 30A. The first touch sensor 200A may be spaced apart from the upper end of the third door 30C to avoid interference therewith. A lower end of the first touch sensor 200A may be spaced apart from the upper end of the third door 30C. Accordingly, the first touch sensor 200A may not be interfered with by the third door 30C, and may be prevented from misdetecting a signal due to the third door 30C.

The second touch sensor 200B may be positioned above the fourth door 30D disposed below the second door 30B. In this case, the second touch sensor 200B may be spaced apart from the upper end of the fourth door 30D to avoid interference therewith. A lower end of the second touch sensor 200B may be spaced apart from the upper end of the fourth door 30D. Accordingly, the second touch sensor 200B may not be interfered with by the fourth door 30D, and may be prevented from misdetecting a signal due to the fourth door 30D.

The first touch sensor 200A and the second touch sensor 200B may have structures corresponding to each other.

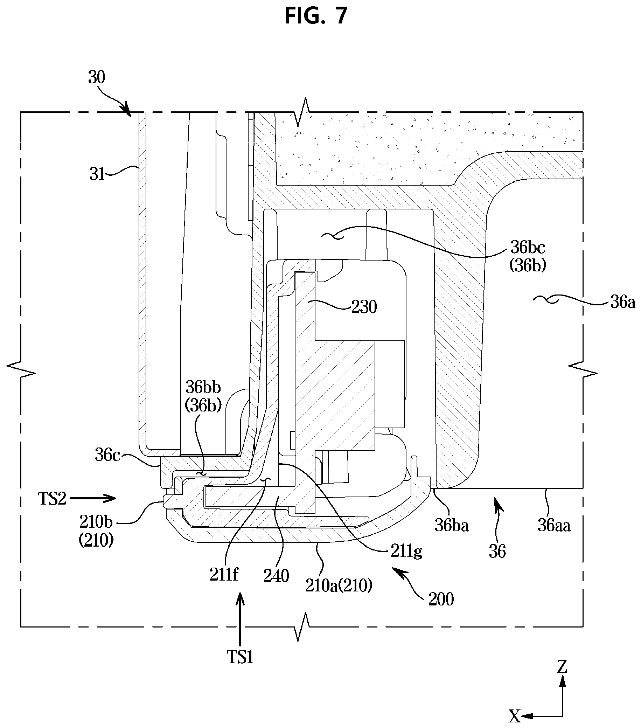

The structure of the door equipped with the touch sensor is described with reference to FIG. 7. FIG. 7 is a cross-sectional view illustrating some components of the door, such as the door panel, the lower cap, and the touch sensor, according to an embodiment of the disclosure.

The first touch sensor 200A and the second touch sensor 200B are collectively described as the touch sensor 200.

The door 30 of the refrigerator 1 may include a handle 36a disposed adjacent to the center of the refrigerator 1 and configured to be held by a user's hand. The handle 36a may be disposed at a lower portion of the door 30, specifically on the lower cap 36.

The handle 36a may be formed by a bottom surface of the lower cap 36 being concavely recessed upward. Specifically, the lower cap 36 may include a handle opening 36aa formed on the bottom surface. The handle 36a may be provided as a groove recessed upward from the handle opening 36aa. A user may access the handle 36a through the handle opening 36aa and open the door 30 by holding the handle 36a.

The handle 36a may extend in the horizontal direction Y. The handle 36a may extend in the horizontal direction Y from a side adjacent to the center of the refrigerator 1 toward an opposite side.

The touch sensor 200 may be positioned such that at least a portion of the touch sensor 200 is located below the door panel 31.

The touch sensor 200 may be provided at the lower portion of the lower cap 36. The lower portion of the touch sensor 200 may protrude downward from the lower cap 36.

The touch sensor 200 may be disposed in front of the handle 36a. That is, when the door 30 is closed, the touch sensor 200 may be positioned in front of the handle 36a.

The lower cap 36 may include a sensor mounting portion 36b on which the touch sensor 200 is mounted. The sensor mounting portion 36b may be formed in front of the handle 36a.

As the touch sensor 200 is positioned in front of the handle 36a, the touch sensor 200 may be positioned closer to the user than the handle 36a when the door 30 is closed. Accordingly, a user is able to touch the touch sensor 200 first before holding the handle 36a, the touch sensor 200 may receive the touch input more efficiently, and the user may more conveniently touch the touch sensor 200.

The touch sensor 200 may include a sensor case 210 forming the exterior of the touch sensor 200. The sensor case 210 may accommodate various components of the touch sensor 200.

The sensor case 210 may be mounted on the lower cap 36. The sensor mounting portion 36b may be provided on the lower cap 36. The sensor case 210 may be mounted on the sensor mounting portion 36b.

The structure of the sensor mounting portion 36b is not limited thereto, and the sensor mounting portion 36b may have various structures for stably mounting the sensor case 210.

A portion of the sensor case 210 may be inserted into the sensor mounting portion 36b to reduce protrusion from the lower cap 36, and may be stably supported by contacting a front end portion 36c of the lower cap 36.

The touch sensor 200 may receive a touch input from a lower side. The touch sensor 200 may include a bottom touch portion 210a that receives the touch input from the lower side of the touch sensor 200. The bottom touch portion 210a may be exposed downward of the door so that a user may touch the bottom touch portion 210a from below. The bottom touch portion 210a may be positioned below a front touch portion 210b, which is described below.

The bottom touch portion 210a may be positioned below a lower end of the door panel 31. Accordingly, when a user inputs a touch to the bottom touch portion 210a, interference caused by the components of the door 30 positioned in front of the bottom touch portion 210a may be prevented.

The touch sensor 200 may also receive a touch input from the front. The touch sensor 200 may include the front touch portion 210b that receives the touch input from the front of the touch sensor 200. Here, the front of the touch sensor 200 refers to a front of the door 30 toward which the door panel 31 faces when the door 30 is closed. The front touch portion 210b may form a front surface of the touch sensor 200. Here, the front surface of the touch sensor 200 refers to one surface of the touch sensor 200 facing the front of the door 30 when the door 30 is closed.

The front touch portion 210b may form a front surface of the sensor case 210. The front touch portion 210b may be exposed forward so that a user may touch the front touch portion 210b from the front. When the user touches the front touch portion 210b, the touch sensor 200 may receive the touch input from the front. The front touch portion 210b may be positioned in front of the bottom touch portion 210a.

The front touch portion 210b may be positioned below a front lower end of the lower cap 36. The front touch portion 210b may be positioned below the sensor mounting portion 36b. The front touch portion 210b may be provided on the front side of the sensor case 210 disposed below an opening 36ba. Accordingly, the front touch portion 210b may be exposed downward to receive the touch input from the front.

The front touch portion 210b may be positioned below the lower end of the door panel 31, thereby being exposed without being covered by the components of the door 30 positioned in front of the front touch portion 210b. In addition, when a user inputs a touch to the front touch portion 210b, interference caused by the components of the door 30 positioned in front of the front touch portion 210b may be prevented.

The touch sensor 200 may receive a touch input TS1 from the lower side of the touch sensor 200 or a touch input TS2 from the front of the touch sensor 200.

The sensor case 210 of the touch sensor 200 of the refrigerator 1 may support a printed circuit board 230 and a conductor 240.

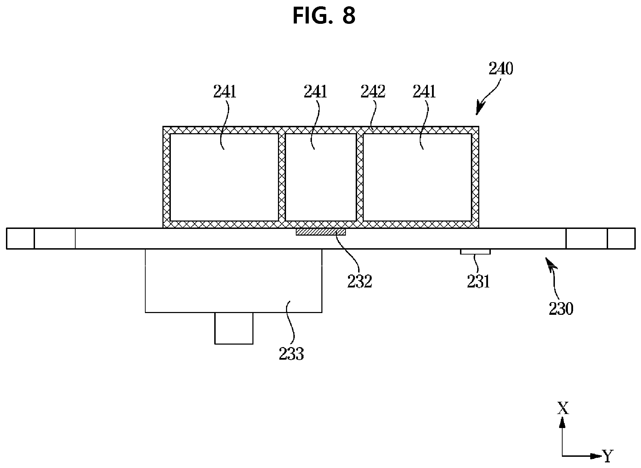

The sensor case 210 may accommodate the printed circuit board 230 including a circuit capable of detecting a change in capacitance and the conductor 240 that transmits a touch signal to the printed circuit board 230. The structure of the touch sensor 200 including the printed circuit board 230 and the conductor 240 is described with reference to FIG. 8.

FIG. 8 is a view illustrating the printed circuit board and the conductor of the touch sensor of the refrigerator viewed from below according to an embodiment of the disclosure.

As shown in FIG. 8, a sensor chip 231 that identifies a touch input based on a change in capacitance may be provided on the printed circuit board 230.

The printed circuit board 230 may be electrically connected to the processor, the power supply, and the like, disposed in the main body 10, by a wire (not shown) passing through the lower cap 36.

A socket 233 to which the wire is connected may be mounted on the printed circuit board 230 so that the sensor chip 231 may be electrically connected to the processor, the power supply, and the like through the wire.

The wire connected to the socket 233 may be connected to the processor to transmit a signal output from the sensor chip 231 to the processor.

The wire connected to the socket 233 may be connected to the power supply to apply power to the printed circuit board 230.

The wire connected to the socket 233 may be connected to the ground.

The conductor 240 may be mounted on the printed circuit board 230.

The conductor 240 is described in more detail below.

The conductor 240 may include a conductive material, and may be connected to an electrode 232 mounted on the printed circuit board 230 to transmit a touch signal to the sensor chip 231 through the electrode 232.

The conductor 240 may include a conductive layer 242 provided along an edge of the conductor 240. The conductive layer 242 may include a conductive material. The conductive layer 242 may be attached to the electrode 232 to transmit a touch signal to the electrode 232.

The conductor 240 may include an elastically deformable elastic member 241. The conductive layer 242 may surround the elastic member 241.

The conductor 240 may include a touch gasket.

The conductor 240 may be elastically deformable. Referring to FIG. 7, as the conductor 240 is elastically deformable, the conductor 240 may be easily inserted into a conductor accommodation groove 211f of the sensor case 210, and may be pressed by a fixing rib 211g of the sensor case 210 to be closely adhered within the case. Here, the conductor accommodation groove 211f may be formed adjacent to a front portion of the sensor case 210.

The printed circuit board 230 coupled to the conductor 240 may be disposed behind the conductor accommodation groove 211f.

The conductor 240 may transmit a touch signal corresponding to a touch input received from the bottom touch portion 210a or the front touch portion 210b to the printed circuit board 230.

The bottom touch portion 210a may cover a lower side of the conductor 240. The bottom touch portion 210a may be disposed below the conductor 240. The bottom touch portion 210a may be disposed below the conductor accommodation groove 211f. The bottom touch portion 210a and the conductor 240 may be arranged parallel to each other in the vertical direction Z.

When a user touches the bottom touch portion 210a, the bottom touch portion 210a may transmit a touch signal corresponding to a change in capacitance at the lower side to the printed circuit board 230 through the conductor 240.

The front touch portion 210b may be disposed in front of the conductor 240. The front touch portion 210b may be disposed in front of the conductor accommodation groove 211f. For example, the front touch portion 210b and the conductor 240 may be arranged parallel to each other in the front-rear direction X.

When a user touches the front touch portion 210b, the front touch portion 210b may transmit a touch signal corresponding to a touch input TS2 to the printed circuit board 230 through the conductor 240.

The conductor 240 is arranged parallel to the front touch portion 210b in the front-rear direction X, and thus the touch signal corresponding to the touch input TS2 received through the front touch portion 210b may be efficiently transmitted to the printed circuit board 230.

In addition, to efficiently receive the touch input TS2 from the front, the conductor 240 may extend from the printed circuit board 230 toward the front touch portion 210b. The conductor 240 may extend in the front-rear direction X within the conductor accommodation groove 211f.

With such a configuration, the touch sensor 200 may receive the touch input TS1 from the lower side or the touch input TS2 from the front, i.e., the touch inputs from at least two directions. Accordingly, the touch sensor 200 may receive the touch inputs more efficiently, thereby improving user convenience.

According to a modified embodiment, the conductor 240 of the touch sensor may be disposed inside a sensor housing, and may be arranged so that the distance from the door panel 31 is greater than or equal to a reference distance.

That is, in the modified embodiment, compared to the conductor 240 of the touch sensor according to an embodiment, the conductor 240 of the touch sensor may be disposed inside the sensor housing, closer to the handle 36a side and farther from the front end portion 36c of the lower cap 36. Accordingly, the modified embodiment may receive only the touch input TS1 from the lower side of the door.

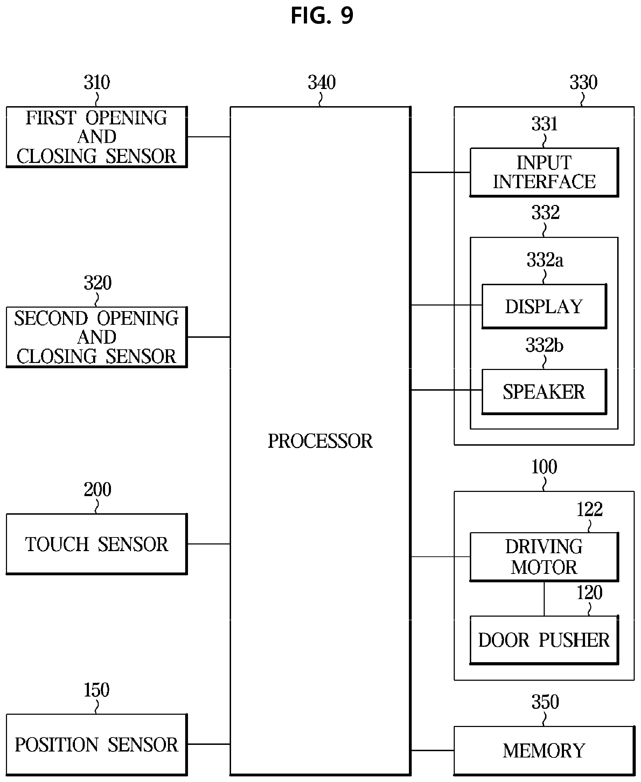

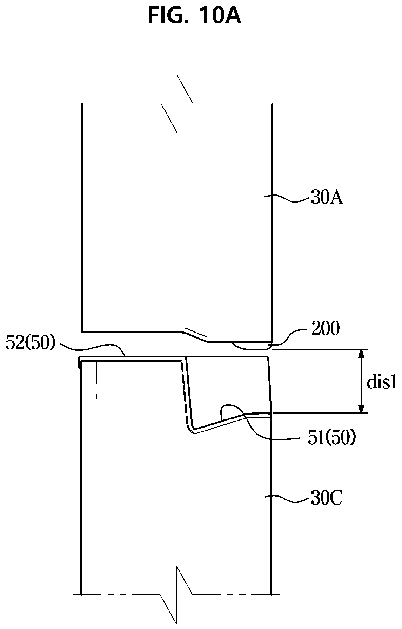

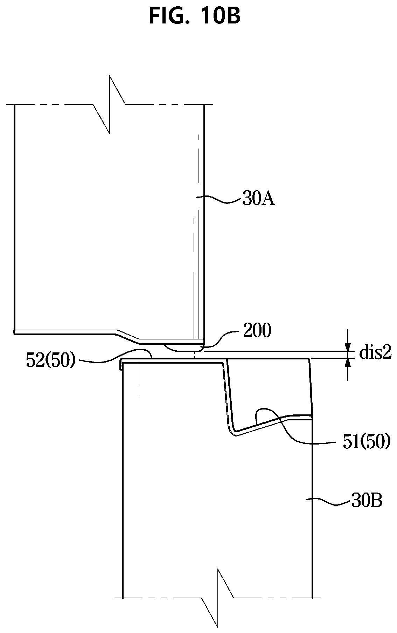

FIG. 9 is a control block diagram of the refrigerator according to an embodiment of the disclosure, which is described with reference to FIG. 10A and FIG. 10B.

FIG. 10A and FIG. 10B are views illustrating a change in distance between the touch sensor and the upper end side of the second door corresponding to the states of the first and second doors of the refrigerator according to an embodiment of the disclosure.

The refrigerator according to an embodiment described with reference to FIG. 1 to FIG. 8 includes the two doors disposed at the upper portion of the main body and the two doors disposed at the lower portion of the main body.

Based on the vertical direction, the two doors disposed at the upper and lower portions on the left side form a pair, and the two doors disposed at the upper and lower portions on the right side form a pair.

The upper and lower door pairs defined herein are considered together when controlling to eliminate mutual signal interference during opening and closing.

The configurations for controlling the two pairs of doors may be the same. Accordingly, only the configuration of one pair of doors is described.

For convenience of description, the door 30A that opens or closes the first storage compartment 21 is described as the first door, and the door 30C that opens or closes the second storage compartment 22 is described as the second door.

As shown in FIG. 9, the refrigerator 1 may include the first door 30A, the second door 30C, the door opening device 100, the position sensor 150, the touch sensor 200, a first opening and closing sensor 310, a second opening and closing sensor 320, a user interface 330, a processor 340, and a memory 350.

The first door 30A may be disposed at the upper portion of the main body 10.

The first door 30A may be a door for opening and closing the first storage compartment 21.

The first door 30A may move due to physical force applied by the door opening device 100, thereby opening the first storage compartment 21.

The first door 30A may open the first storage compartment 21 by manual movement.

The first door 30A may be opened in an automatic mode or a manual mode.

Opening the first door 30A in the automatic mode includes opening the first door 30A by a force applied by the door opening device 100. Here, the force applied by the door opening device 100 may be all or part of the force required for opening the first door 30A.

In a case where part of the force applied to the first door is provided by the door opening device 100, a remaining force applied to the first door 30A may be provided by a user.

Opening the first door 30A in the manual mode includes opening the first door 30A using a force applied by a user.

The first door 30A may close the first storage compartment 21 by manual movement.

The second door 30C may be disposed at the lower portion of the main body 10, and may be disposed below the first door 30A.

The second door 30C may be a door for opening or closing the second storage compartment 22.

The second door 30C may open or close the second storage compartment 22 by manual movement. Here, the manual movement refers to moving the first door 30A only by a force applied by a user.

As shown in FIG. 10A, the second door 30C may include the handle area 50 at the upper end side of the second door.

The handle area 50 may include a groove portion 51 recessed downward from the upper end side of the second door 30C, and a wall portion 52 forming a wall surface of the groove portion 51.

The groove portion 51 may be positioned on the upper end side of the second door 30C to face the touch sensor 200 of the first door 30A when the first and second doors 30A and 30C are in a closed state.

When the first and second doors 30A and 30C are in a closed state, the groove portion 51 of the second door 30C may be spaced apart from the touch sensor 200 of the first door 30A by a first distance dis1.

As shown in FIG. 10B, the wall portion 52 may be positioned on the upper end side of the second door 30C to face the touch sensor 200 of the first door when the first door 30A is in a closed state and the second door 30C is transitioned from a closed state to an open state.

The wall portion 52 of the upper end side of the second door 30C may be made of a conductive material.

When the first door 30A is in a closed state and the second door 30C is transitioned from a closed state to an open state, the groove portion 51 and the wall portion 52 of the second door 30C move toward the front of the refrigerator. As a result, the wall portion 52 at the upper end side of the second door 30C becomes adjacent to the touch sensor 200 of the first door 30A. In this instance, the wall portion 52 at the upper end side of the second door 30C and the touch sensor 200 of the first door may be spaced apart by a second distance dis2 shorter than the first distance dis1.

That is, when the first door 30A is in a closed state and the second door 30C is transitioned from a closed state to an open state, signal interference is likely to occur in the touch sensor 200 of the first door due to the wall portion 52 of the second door 30C. As a result, the first door may be opened regardless of a user's intention. To prevent the above, according to the embodiment, automatic opening of the first door may be limited based on states of the first and second doors, which will be described below.

The door opening device 100 may be provided on the main body 10 and disposed adjacent to the first door 30A.

The door opening device 100 may apply physical force to the first door 30A. That is, the door opening device 100 may press the first door 30A to move the first door 30A. The door opening device 100 may cause the first storage compartment 21 to be opened by movement of the first door 30A.

The door opening device 100 may cause the first storage compartment 21 to be automatically opened.

The door opening device 100 may include a driving motor 122, a gear portion 121 connected to the driving motor 122 and configured to receive a rotational force of the driving motor 122 and convert rotational movement into linear movement, and the door pusher 120 connected to the gear portion 121 and configured to linearly reciprocate.

The driving motor 122 may rotate in a first rotation direction or in a second rotation direction opposite to the first rotation direction.

The door pusher 120 may linearly move in the first direction based on the rotation direction of the driving motor 122, or linearly move in the second direction opposite to the first direction.

The door pusher 120 may linearly move from a first position to a second position in the first direction, or linearly move from the second position to the first position in the second direction opposite to the first direction.

The door pusher 120 may be linearly reciprocable.

The door pusher 120 may linearly move in the first direction to apply physical force to the first door, thereby opening the first door 30A, and may move in the second direction to return to the original position based on the first door 30A being completely opened.

The door pusher 120 may linearly move from the first position to the second position to apply physical force to the first door 30A, thereby opening the first door 30A, and may move from the second position to the first position to return to the original position based on the first door 30A being completely opened.

The position sensor 150 may detect a position of the door pusher 120 and transmit position information about the detected position to the processor 340.

The position sensor 150 may also detect an opening angle of the first door 30A corresponding to the movement of the first door 30A. That is, the position of the door pusher 120 detected by the position sensor 150 may correspond to the opening angle of the first door 30A.

The position sensor 150 may include a Hall sensor that detects a magnetic field of the magnet 160 mounted on the door pusher 120, but is not limited thereto.

The touch sensor 200 may be disposed on the first door 30A.

The touch sensor 200 may be provided at the lower end of the first door 30A and disposed adjacent to the second door 30C.

The touch sensor 200 may detect a touch input of a user and transmit a touch signal corresponding to the detected touch input of the user to the processor 340.

The touch input may be a user input for opening the first door 30A.

The touch input for opening the first door 30A may be received by the bottom touch portion 210a at the lower end of the first door.

The touch input for opening the first door 30A may be received by the front touch portion 210b on the front of the lower end of the first door.

The touch input for opening the first door 30A may be received by the bottom touch portion 210a at the lower end of the first door, and may be received by the front touch portion 210b on the front of the lower end of the first door.

The touch sensor 200 may include an electrode.

The touch sensor 200 may include a capacitance sensor that detects capacitance of the electrode.

The touch sensor 200 may detect capacitance in response to the touch input, and may transmit a touch signal corresponding to the detected capacitance to the processor 340.

The detected capacitance may be greater than or equal to a reference capacitance in response to the touch input.

The first opening and closing sensor 310 may be provided on the main body 10, specifically in the first storage compartment 21, may detect a state of the first door 30A, and may output first detection information corresponding to the detected state of the first door 30A.

The state of the first door 30A may include an open state and a closed state.

For example, the first opening and closing sensor 310 may output a high signal based on the first door 30A being in a closed state, and output a low signal based on the first door 30A being in an open state, but is not limited thereto.

The second opening and closing sensor 320 may be provided on the main body 10, specifically in the second storage compartment 22, may detect a state of the second door 30C, and may output second detection information corresponding to the detected state of the second door 30C.

The state of the second door 30C may include an open state and a closed state.

For example, the second opening and closing sensor 320 may output a high signal based on the second door 30C being in a closed state, and output a low signal based on the second door 30C being in an open state, but is not limited thereto.

The first opening and closing sensor 310 and the second opening and closing sensor 320 may include a micro switch, a limit switch, a magnetic switch, a reed switch, a toggle switch, a tact switch, and the like, but are not limited thereto.

The first opening and closing sensor 310 and the second opening and closing sensor 320 may include an optical sensor, an ultrasonic sensor, or an impact sensor, but are not limited thereto.

The user interface 330 may be provided on any one of the plurality of doors, specifically on the door panel 31.

The user interface 330 may receive a user input and output information related to operation of the refrigerator.

The user interface 330 may include an input interface 331 for receiving a user input and an output interface 332 for outputting information related to operation of the refrigerator.

The input interface 331 may receive a user input and transmit the user input to the processor 340.

The input interface 331 may receive a target temperature of each storage compartment, and may receive a storage mode of each storage compartment.

The storage mode may include a freezing mode, a refrigeration mode, a kimchi mode, a vegetable mode, and the like.

The input interface 331 may also receive an opening mode of the first door 30A.

The opening mode of the first door 30A may include a manual mode for opening using a force applied by a user, and an automatic mode for automatic opening by the door opening device 100.

The input interface 331 may include hardware devices, such as a key, a button, a switch, a pedal, a mouse, a track-ball, a microphone, and the like.

The input interface 331 may also include software devices, such as a graphical user interface (GUI), for example, a touch pad. The touch pad may be implemented as a touch screen panel (TSP) and may form a mutual layer structure with a display 332a.

The output interface 332 may include the display 332a and a speaker 332b.

The display 332a may display information related to a state or operation of the refrigerator 1 based on a control command of the processor 340, and may display information for guiding a user input.

The display 332a may display information which is input to the input interface 331.

The display 332a may display a target temperature for each storage compartment, and may display a storage mode for each storage compartment.

The display 332a may display an opening mode of the first door 30A.

The display 332a may display an open state and a closed state of the door for each storage compartment.

The display 332a may display information about a state in which the first door 30A is automatically openable (hereinafter, an 'automatically openable state') and a state in which the first door 30A is not automatically openable (hereinafter, an 'automatically non-openable state').

The automatically openable state of the first door is a state in which the first door may be opened by a physical force applied by the door opening device. The automatically non-openable state is a state in which the first door may be opened only by a force applied by a user without assistance from the door opening device.

The display 332a includes a plurality of seven-segments.

The display 332a may be provided as a liquid crystal display (LCD), a digital light processing (DLP) panel, a plasma display panel, an electro luminescence (EL) panel, an electrophoretic display (EPD) panel, an electrochromic display (ECD) panel, a light emitting diode (LED) panel, or an organic light emitting diode (OLED) panel, but is not limited thereto.

The speaker 332b may output information related to a state or operation of the refrigerator 1 as a guidance sound based on a control command of the processor 340, and may output information for guiding a user input as the guidance sound.

The speaker 332b may output the guidance sound corresponding to a change in a target temperature for each storage compartment, or output the guidance sound corresponding to a change in a storage mode for each storage compartment.

The speaker 332b may output an opening alert of the first door 30A as a sound.

The speaker 332b may output an opening alert of the second door 30C as a sound.

The processor 340 controls the overall operation of the refrigerator 1.

The processor 340 may receive a target temperature for each storage compartment from the input interface 331, and control the display 332a to display the received target temperature for each storage compartment.

The processor 340 may control an operation of the cooling system based on the target temperature for each storage compartment and a temperature detected by a temperature sensor (not shown) for each storage compartment.

The processor 340 may receive a storage mode for each storage compartment from the input interface 331, and control the display 332a to display the received storage mode for each storage compartment.

The processor 340 may receive an opening mode of the first door 30A from the input interface 331, and control the display 332a to display the received opening mode of the first door 30A.

The opening mode of the first door 30A may include an automatic mode for automatically opening the first door 30A and a manual mode for manually opening the first door 30A.

The processor 340 controls the first door 30A to be opened in the manual mode based on receiving the manual mode from the input interface 331.

The processor 340 controls the first door 30A to be opened in the automatic mode based on receiving the automatic mode from the input interface 331.

In the manual mode, the processor 340 may control at least one of the touch sensor 200 or the door opening device 100 to be deactivated.

In controlling deactivation of the touch sensor 200, the processor 340 may prevent capacitance from being detected through the touch sensor 200 by blocking an input signal applied to the touch sensor 200. The input signal may include a pulse voltage or a pulse current.

In controlling deactivation of the door opening device 100, the processor 340 may prevent the door opening device 100 from operating based on a touch signal received from the touch sensor 200.

That is, deactivating the door opening device 100 is limiting operation of the door opening device 100.

For example, in controlling deactivation of the door opening device 100, the processor 340 may not transmit a control signal to the door opening device 100 based on the touch signal received from the touch sensor 200.

As another example, in controlling deactivation of the door opening device 100, the processor 340 may omit operation of the door opening device by ignoring the touch signal received from the touch sensor 200.

The processor 340 may control the door pusher 120 to be maintained at the first position by deactivating the door opening device 100.

That is, the processor 340 may prevent the door pusher 120 from moving from the first position to the second position. Accordingly, the first door 30A may be prevented from being automatically opened.

The processor 340 may control the door opening device 100 to automatically open the first door 30A based on receiving the automatic mode from the input interface 331. The opening mode of the first door 30A may be set to the automatic mode by default.

In controlling the first door 30A to be automatically opened in the automatic mode, the processor 340 may control the door opening device 100 to be deactivated or activated based on states of the first and second doors 30A and 30C.

The control operation of the processor when automatically opening the first door 30A is described in more detail.

The processor 340 identifies states of the first and second doors based on receiving a touch signal from the touch sensor 200.

The processor 340 may identify whether a touch input is received based on the touch signal received from the touch sensor 200.

The processor 340 may identify that the touch input is received based on capacitance corresponding to the touch signal being greater than or equal to a reference capacitance, and may identify that the touch input is not received based on the capacitance being less than the reference capacitance.

In recognizing a state of the first door, the processor 340 identifies whether the first door 30A is in a closed state or an open state based on first detection information received from the first opening and closing sensor 310.

In recognizing a state of the second door, the processor 340 identifies whether the second door 30C is in a closed state or an open state based on second detection information received from the second opening and closing sensor 320.

The processor 340 controls operation of the door opening device 100 based on the touch signal received from the touch sensor 200 and on the first door 30A and the second door 30C being in a closed state.

In controlling operation of the door opening device 100, the processor 340 may control the driving motor 122 so that the driving motor 122 in the door opening device 100 rotates in the first rotation direction. In this case, as the driving motor 122 rotates in the first rotation direction, the door pusher 120 linearly moves to the second position, and as the door pusher 120 linearly moves to the second position, the door pusher 120 may apply physical force to the first door 30A.

In controlling operation of the door opening device 100, the processor 340 may identify an opening angle of the first door 30A based on position information received from the position sensor 150, and may control the door opening device 100 to stop operating based on the identified opening angle of the first door 30A reaching a target angle.

The processor 340 may control the driving motor 122 so that the driving motor 122 in the door opening device 100 rotates in the second rotation direction based on the identified opening angle of the first door 30A reaching the target angle. In this case, as the driving motor 122 rotates in the second rotation direction, the door pusher 120 linearly moves from the second position to the first position, and as the door pusher 120 linearly moves to the first position, the door pusher 120 may return to the original position.

The processor 340 may identify a position of the door pusher 120 based on the position information received from the position sensor 150, and may control the driving motor 122 to stop operating based on the identified door pusher 120 being at a reference position.

That is, the processor 340 may cause the door pusher 120 to return to the original position by controlling the driving motor 122 to rotate in the second rotation direction.

The processor 340 may control at least one of the display 332a or the speaker 332b to output guidance information informing automatic opening of the first door.

The processor 340 may measure an open time of the automatically opened first door 30A, and may control at least one of the display 332a or the speaker 332b to output an opening alert of the first door 30A based on the measured open time reaching a preset time.

The processor 340 may identify whether the first door 30A is transitioned from an open state to a closed state based on detection information received from the first opening and closing sensor 310, may initialize the measured open time based on the first door 30A being identified to have transitioned from an open state to a closed state, may control at least one of the display 332a or the speaker 332b to stop outputting the opening alert of the first door 30A. In addition, the processor 340 may control the display 332a to display guidance information guiding the closed state of the first door 30A.

When the first door 30A is in an open state, the processor 340 may control at least one of the touch sensor 200 or the door opening device to be deactivated.

When the first door 30A is in an open state, the processor 340 may control the door opening device 100 to maintain the door pusher 120 at the first position in response to receiving a touch signal from the touch sensor 200.

When the first door 30A is in an open state, the processor 340 may prevent the driving motor 122 from operating even though the touch signal is received from the touch sensor 200.

When the touch signal is received from the touch sensor 200, the first door 30A is in a closed state, and the second door 30C is transitioned from a closed state to an open state, the processor 340 may control the door opening device 100 to be deactivated.

The processor 340 may control at least one of the display 332a or the speaker 332b to output an automatically non-openable state of the first door. In this case, the first door 30A may be opened by a force applied by a user.

The processor 340 may control the moving pusher 120 not to move by controlling the door opening device 100 to be deactivated.

The processor 340 may control the door opening device 100 to be deactivated so as to prevent the driving motor 122 from operating, thereby maintaining the position of the moving pusher 120 at the first position. The processor 340 may prevent the moving pusher 120 from protruding.

When the second door 30C is transitioned to a closed state, the processor 340 may control at least one of the display 332a or the speaker 332b to output an automatically openable state of the first door.

When the first door is in a closed state and the second door 30C is transitioned to a closed state, the processor 340 may control the door opening device 100 to be activated.

The processor 340 may control the moving pusher 120 to be moveable by controlling the door opening device 100 to be activated.

In a state where the moving pusher 120 is movable, when a touch signal is received from the touch sensor 200, the processor 340 may control the driving motor 122 to move the moving pusher 120 from the first position to the second position.

When the second door 30C is in an open state, the processor 340 may control the door opening device 100 not to operate to prevent the first door 30A from being automatically opened based on receiving a touch signal from the touch sensor 200.

That is, when the second door 30C is in an open state, the processor 340 may not transmit a control signal to the door opening device 100 so that the first door 30A is not automatically opened based on receiving the touch signal from the touch sensor 200.

The processor 340 may measure an open time of the second door 30C based on the second door 30C being identified to have transitioned from a closed state to an open state. The processor 340 may control at least one of the display 332a or the speaker 332b to output an opening alert of the second door 30C based on the measured open time reaching a preset time.

The processor 340 may initialize the measured open time based on the second door 30C being ridentified to have transitioned from an open state to a closed state, and control the display 332a to display guidance information guiding the closed state of the second door 30C.

As such, according to the embodiment, when the second door is transitioned from a closed state to an open state, the first door may be prevented from being automatically opened even though an interference signal is received by the touch sensor due to the movement of the second door.

The processor 340 may identify a door pair in which signal interference may occur based on identification information of the door for each storage compartment and position information of the door stored in the memory 350.

The processor 340 may match the door opening device and the touch sensor corresponding to each of the plurality of doors based on the identification information of the door opening device and the identification information of the touch sensor corresponding to each of the plurality of doors stored in the memory 350. When a touch signal is received from the touch sensor based on matching information, the processor 340 may identify the door opening device to open the door and control operation of the identified door opening device.

The processor 340 may identify a door for detecting an open state and a closed state based on the identification information and detection information of an opening and closing sensor corresponding to each of the plurality of doors stored in the memory 350.

The processor 340 may be implemented as a memory (not shown) that stores data about an algorithm for controlling operations of components in the refrigerator or a program that reproduces the algorithm, and a processor (not shown) that performs the aforementioned operations using the data stored in the memory. In this case, the memory 350 and the processor 340 may be implemented as separate chips. Alternatively, the memory 350 and the processor 340 may be implemented as a single chip.

The processor 340 may perform the aforementioned operations using the data stored in the memory 350.

The processor 340 may include hardware such as a central processing unit (CPU) or memory, and software such as a control program. For example, the processor 340 may include at least one memory that stores data in the form of a program or an algorithm for controlling operations of components in the refrigerator, and one or more processor chips or one or more processing cores that perform the aforementioned operations using the data stored in the at least one memory.

The processor 340 may include a separate neural processing unit (NPU) that performs operation of an artificial intelligence model, a graphics processing unit (GPU), and the like.

The memory 350 may store opening angle information of the first door corresponding to position information of the position sensor 150.

The memory 350 may store information about a target angle.

The memory 350 may store information about a reference capacitance.

The memory 350 may store identification information and position information of the door for each storage compartment.

The memory 350 may store identification information of the opening and closing sensor corresponding to each of the plurality of doors.

In a case where a plurality of doors are provided at an upper portion of the main body, identification information of door opening device and identification information of touch sensor corresponding to each of the plurality of doors may be stored.

The memory 350 may store data about an algorithm for controlling operations of components in the refrigerator or a program that reproduces the algorithm.

The memory 350 may be implemented as at least one of a non-volatile memory, such as a cache, a read only memory (ROM), a programmable ROM (PROM), an erasable and programmable ROM (EPROM), an electrically erasable and programmable ROM (EEPROM), and a flash memory, or a volatile memory device, such as a random access memory (RAM), or a storage medium such as a hard disk drive (HDD) and a CD-ROM, but is not limited thereto.

The memory 350 may include one or more memory chips or one or more memory blocks.

At least one component may be added or omitted corresponding to the performance of the components of the refrigerator shown in FIG. 9. In addition, it will be easily understood by those skilled in the art that mutual positions of the components may be modified corresponding to the performance or structure of the refrigerator.

Meanwhile, each component shown in FIG. 9 refers to a software and/or hardware component such as a field programmable gate array (FPGA) and an application specific integrated circuit (ASIC).

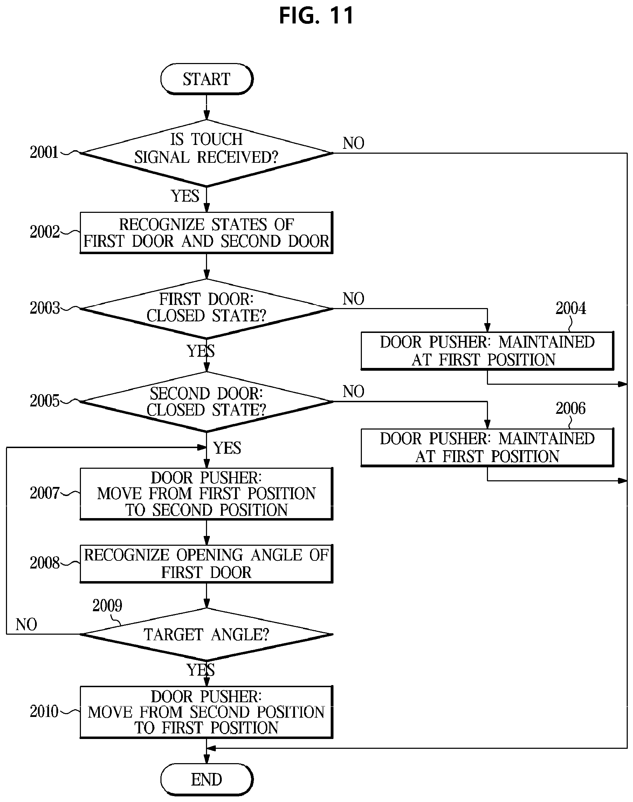

FIG. 11 is a flowchart of a method for controlling a refrigerator according to an embodiment of the disclosure.

When a touch signal is received from the touch sensor 200 (2001), the refrigerator may identify a state of the first door 30A based on first detection information received from the first opening and closing sensor 310, and identify a state of the second door 30C based on second detection information received from the second opening and closing sensor 320 (2002).

The refrigerator identifies whether the first door 30A is in a closed state (2003).

When the first door 30A is identified as being in an open state, the refrigerator maintains a position of the door pusher 120 at the first position (2004). That is, it is determined that the touch signal is received in a state where the first door 30A is already opened, and thus the refrigerator prevents movement of the moving pusher 120 of the door opening device.

The refrigerator identifies whether the second door 30C is in a closed state in a state where the first door 30A is in a closed state (2005).

When the second door 30C is recognized as being in an open state, the refrigerator maintains the door pusher 120 at the first position (2006).

That is, it is determined that the touch signal may be caused by signal interference between the second door and the touch sensor due to opening of the second door, and thus the refrigerator prevents movement of the moving pusher 120 of the door opening device.

A user may open the first door using a force of the user. In this case, the refrigerator may identify whether the first door 30A is in an open state based on the first detection information received from the first opening and closing sensor 310. Thereafter, the refrigerator may output guidance information about opening information of the first door 30A via the display 332a.

The refrigerator may measure an open time of the second door 30C based on the second door 30C being identified to have transitioned from a closed state to an open state, and may control at least one of the display 332a or the speaker 332b to output an opening alert of the second door 30C based on the measured open time reaching a preset time.

When the second door 30C is identified as being in a closed state, the refrigerator controls the door opening device 100 to automatically open the first door 30A.

That is, when the second door 30C is identified as being in a closed state, the refrigerator controls rotation of the driving motor 122 so that the moving pusher 120 is moved from the first position to the second position by the rotational force of the driving motor (2007). Accordingly, the first door may be automatically opened.

During automatic opening of the first door 30A, the refrigerator may identify an opening angle of the first door 30A based on position information received from the position sensor 150 (2008), and may compare the recognized opening angle of the first door 30A with a target angle.

The refrigerator may identify whether the identified opening angle of the first door 30A has reached the target angle (2009).

The refrigerator may control the door opening device 100 to stop operating based on the identified opening angle of the first door 30A reaching the target angle.

The refrigerator may control the driving motor 122 so that the driving motor in the door opening device 100 rotates in the second rotation direction, based on the identified opening angle of the first door 30A reaching the target angle. Accordingly, the door pusher 120 may move from the second position to the first position (2010).

The refrigerator may output guidance information informing automatic opening of the first door through at least one of the display 332a or the speaker 332b.

The refrigerator may measure an open time of the automatically opened first door 30A, and may output an opening alert of the first door 30A through at least one of the display 332a or the speaker 332b based on the measured open time reaching a preset time.

The refrigerator may identify whether the first door 30A is in a closed state or an open state based on the first detection information received from the first opening and closing sensor 310, and may display guidance information guiding the closed state of the first door 30A via the display 332a based on the first door 30A being in a closed state.

In a state where the first door is in a closed state and the second door is in an open state, the refrigerator may monitor a state of the second door 30C based on the second detection information received from the second opening and closing sensor 320.

The refrigerator may control the first door 30A to an automatically openable state of the first door 30A, based on the second door 30C being in a closed state while monitoring a state of the second door 30C.

The refrigerator may output guidance information guiding the automatically openable state of the first door 30A through at least one of the display 332a or the speaker 332b.

That is, when the first door 30A is in the automatically openable state, the refrigerator may control operation of the door opening device 100 to automatically open the first door 30A based on receiving the touch signal from the touch sensor 200.

When the first door 30A is in the automatically openable state, the refrigerator may control rotation of the driving motor so that the moving pusher 120 is moved from the first position to the second position based on receiving the touch signal from the touch sensor 200.

The refrigerator may initialize the measured open time based on the second door 30C being identified to have transitioned from an open state to a closed state, and may control the display 332a to display guidance information guiding the closed state of the second door 30C.

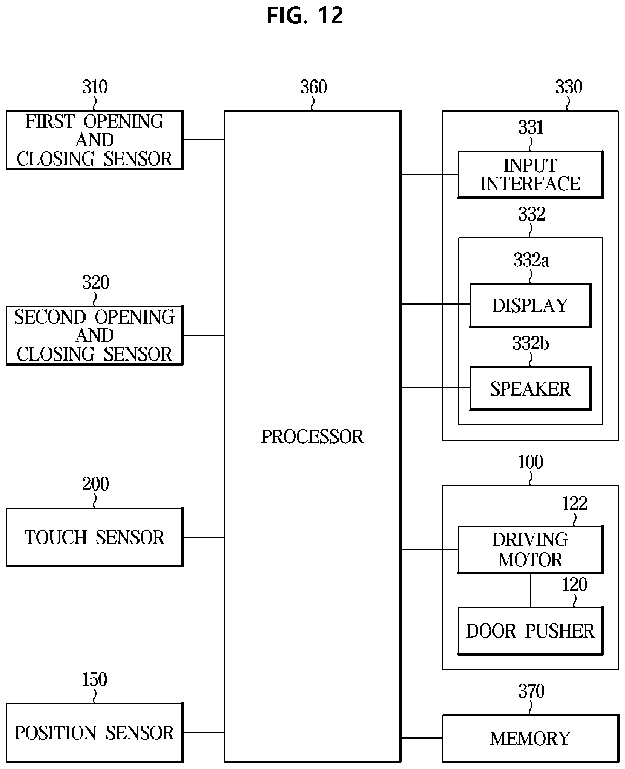

FIG. 12 is a control block diagram of the refrigerator according to another embodiment of the disclosure.

The refrigerator 1 according to another embodiment of the disclosure may include the first door 30A, the second door 30C, the door opening device 100, the position sensor 150, the touch sensor 200, the first opening and closing sensor 310, the second opening and closing sensor 320, the user interface 330, a processor 360, and a memory 370.

The first door 30A, the second door 30C, the door opening device 100, the position sensor 150, the touch sensor 200, the first opening and closing sensor 310, the second opening and closing sensor 320, and the user interface 330 of the refrigerator 1 according to another embodiment of the disclosure are the same as the first door 30A, the second door 30C, the door opening device 100, the position sensor 150, the touch sensor 200, the first opening and closing sensor 310, the second opening and closing sensor 320, and the user interface 330 of the refrigerator 1 according to an embodiment of the disclosure shown in FIG. 9, and thus descriptions thereof are omitted.

The processor 360 controls overall operation of the refrigerator 1.

The processor 360 controls an opening mode of the first door 30A to a manual mode based on receiving the manual mode as the opening mode of the first door 30A from the input interface 331. In this case, the configuration of the manual mode of the first door by the processor 360 is the same as that of the manual mode of the first door by the processor 340 according to an embodiment, and thus the description thereof is omitted.

The processor 360 may control the door opening device 100 to automatically open the first door 30A based on receiving an automatic mode from the input interface 331.

The opening mode of the first door 30A may be set to the automatic mode by default.

When a touch signal is received from the touch sensor 200, the processor 360 identify whether the first door 30A is in a closed state or an open state based on detection information received from the first opening and closing sensor 310.

When the touch signal is received from the touch sensor 200, the processor 360 recognizes whether the second door 30C is in a closed state or an open state based on detection information received from the second opening and closing sensor 320.

The processor 360 controls operation of the door opening device 100, when the touch signal is received from the touch sensor and the first door 30A and the second door 30C are in a closed state.

In controlling operation of the door opening device 100, the processor 360 may control the driving motor 122 so that the driving motor 122 in the door opening device 100 rotates in the first rotation direction.

The processor 360 causes the moving pusher 120 to move from the first position to the second position by the rotation of the driving motor 122.

During automatic opening control of the first door 30A, the processor 360 may identify an opening angle of the first door 30A based on position information received from the position sensor 150, and may control the door opening device 100 to stop operating based on the recognized opening angle of the first door 30A reaching a target angle.

The processor 360 may control the driving motor 122 so that the driving motor 122 in the door opening device 100 rotates in the second rotation direction based on the identifiedopening angle of the first door 30A reaching the target angle.

The processor 360 may cause the door pusher 120 to move from the second position to the first position by controlling the driving motor to rotate in the second rotation direction.

The processor 360 may control at least one of the display 332a or the speaker 332b to output guidance information informing automatic opening of the first door.

The processor 360 may measure an open time of the automatically opened first door 30A, and control at least one of the display 332a or the speaker 332b to output an opening alert of the first door 30A based on the measured open time reaching a preset time.

The processor 360 may identify whether the first door 30A is transitioned from an open state to a closed state based on first detection information received from the first opening and closing sensor 310, may initialize the measured open time based on the first door 30A being identified to have transitioned from an open state to a closed state, may control at least one of the display 332a or the speaker 332b to stop outputting the opening alert of the first door 30A, and may control the display 332a to display guidance information guiding the closed state of the first door 30A.

The processor 360 may control the display 332a to display guidance information informing an opening alert of the second door 30C based on the second door 30C being identifiedto have transitioned from a closed state to an open state.

When the touch signal is received from the sensor, the first door 30A is in a closed state, and the second door 30C is in an open state, the processor 360 controls the door opening device 100 to be deactivated.

The processor 360 may control the door opening device 100 not to operate to prevent the first door 30A from being automatically opened based on receiving a touch signal from the touch sensor 200.

The processor 360 may cause the moving pusher 120 to be maintained at the first position by preventing the door opening device 100 from operating. That is, the moving pusher may be prevented from protruding and applying physical force to the first door.

The touch signal received from the touch sensor 200 may include a signal corresponding to capacitance greater than or equal to a reference capacitance.

That is, the processor 360 may not transmit a control signal to the door opening device 100 so that the first door 30A is not automatically opened based on receiving the touch signal from the touch sensor 200.

The processor 360 may control the display 332a to output guidance information about an automatically non-openable state of the first door 30A.

As such, in the embodiment, when the second door is transitioned from a closed state to an open state, the touch signal received from the touch sensor may be identified as an interference signal caused by the second door, thereby preventing the first door from being automatically opened.

Monitoring the second door 30C may include monitoring a time when a state of the second door is transitioned or an angle at which the second door is opened.

When the second door is recognized to have transitioned from a closed state to an open state, the processor 360 measures an open time from when the state of the second door is transitioned, and controls the door opening device to be deactivated based on the measured time being less than a reference time.

That is, the position of the door pusher may be maintained at the first position by deactivating the door opening device.

The reference time may be a time during which the wall portion 52 of the handle area of the second door deviates from the position where the wall portion 52 is vertically arranged with the touch sensor 200 of the first door. The reference time may be pre-stored information obtained through experiment.

When the opening angle of the second door increases as the open time of the second door elapses and the wall portion 52 of the handle area of the second door deviates from the area adjacent to the touch sensor 200, the processor 360 may control the door opening device 100 to automatically open the first door 30A based on the touch signal received from the touch sensor 200 even in a state where the second door is opened.

The processor 360 may control at least one of the display 332a or the speaker 332b to output guidance information guiding an automatically openable state of the first door.

In a case where an angle sensor (not shown) capable of detecting an opening angle of the second door 30C is provided on the second door 30C, the processor 360 may identify the opening angle of the second door 30C based on angle information received from the angle sensor, may control the door opening device to be deactivated based on the identified opening angle being less than a reference angle, and may control the door opening device to be activated based on the identified opening angle being greater than or equal to the reference angle.

Here, the angle sensor may include a Hall sensor, but is not limited thereto.

The processor 360 may identify the opening angle of the second door 30C based on the angle information received from the angle sensor, may cause the door pusher to be maintained at the first position based on the identified opening angle being less than the reference angle, and may control the door opening device so that the door pusher may move from the first position to the second position based on the identified opening angle being greater than or equal to the reference angle.

The processor 360 may measure an open time of the second door 30C based on the second door 30C being identified to have transitioned from a closed state to an open state, and may control at least one of the display 332a or the speaker 332b to output an opening alert of the second door 30C based on the measured open time reaching a preset time.

The processor 360 may initialize the measured open time based on the second door 30C being identified to have transitioned from an open state to a closed state, and may control the display 332a to display guidance information guiding the closed state of the second door 30C.

The processor 360 may be implemented as a memory (not shown) that stores data about an algorithm for controlling operations of components in the refrigerator or a program that reproduces the algorithm, and a processor (not shown) that performs the aforementioned operations using the data stored in the memory. In this case, the memory 370 and the processor 360 may be implemented as separate chips. Alternatively, the memory 370 and the processor 360 may be implemented as a single chip.

The processor 360 may perform the aforementioned operations using the data stored in the memory 370.

The processor 360 may include hardware such as a CPU or a memory, and software such as a control program. For example, the processor 360 may include at least one memory that stores data in the form of a program or an algorithm for controlling operations of components in the refrigerator, and one or more processor chips or one or more processing cores that perform the aforementioned operations using the data stored in the at least one memory.

The processor 360 may include a separate neural processing unit (NPU) that performs operation of an artificial intelligence model, a graphics processing unit (GPU), and the like.

The memory 370 may store opening angle information of the first door corresponding to position information of the position sensor 150.

The memory 370 may store information about a target angle.

The memory 370 may store information about a reference time for changing an opening mode of the first door.

The memory 370 may store information about a reference angle for changing an opening mode of the first door.

The memory 370 may store information about a reference capacitance.

The memory 370 may store identification information and position information of a door for each storage compartment.

The memory 370 may store identification information of an opening and closing sensor corresponding to each of the plurality of doors.

In a case where a plurality of doors are provided at an upper portion of the main body, identification information of door opening device and identification information of touch sensor corresponding to each of the plurality of doors may be stored.

The memory 370 may store data about an algorithm for controlling operations of components in the refrigerator or a program that reproduces the algorithm.

The memory 370 may be implemented as at least one of a non-volatile memory, such as a cache, a read only memory (ROM), a programmable ROM (PROM), an erasable and programmable ROM (EPROM), an electrically erasable and programmable ROM (EEPROM), and a flash memory, or a volatile memory device, such as a random access memory (RAM), or a storage medium such as a hard disk drive (HDD) and a CD-ROM, but is not limited thereto.

The memory 370 may include one or more memory chips or one or more memory blocks.

At least one component may be added or omitted corresponding to the performance of the components of the refrigerator shown in FIG. 12. In addition, it will be easily understood by those skilled in the art that mutual positions of the components may be modified corresponding to the performance or structure of the refrigerator.

Meanwhile, each component shown in FIG. 12 refers to a software and/or hardware component such as a field programmable gate array (FPGA) and an application specific integrated circuit (ASIC).

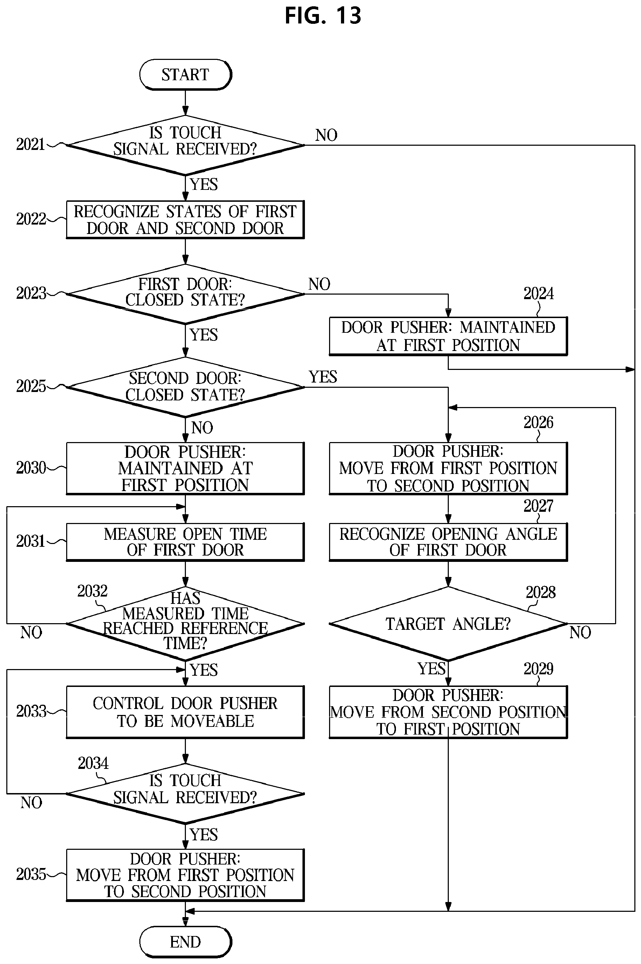

FIG. 13 is a flowchart of a method for controlling a refrigerator according to another embodiment of the disclosure.

When a touch signal is received from the touch sensor 200 (2021), the refrigerator may identify a state of the first door 30A based on first detection information received from the first opening and closing sensor 310, and identify a state of the second door 30C based on second detection information received from the second opening and closing sensor 320 (2022).

The refrigerator identifies whether the first door 30A is in a closed state (2023).

When the first door 30A is identified as being in an open state, the refrigerator maintains a position of the door pusher 120 at the first position (2024). That is, it is determined that the touch signal is received in a state where the first door 30A is already opened, and thus the refrigerator prevents movement of the moving pusher 120 of the door opening device.

The refrigerator identifies whether the second door 30C is in a closed state when the first door 30A is identified as being in a closed state (2025).

When the second door 30C is identified as being in a closed state, the refrigerator controls the door opening device 100 to automatically open the first door 30A.

That is, when the second door 30C is identified as being in a closed state, the refrigerator controls rotation of the driving motor 122 so that the moving pusher 120 is moved from the first position to the second position by the rotational force of the driving motor (2026). Accordingly, the first door may be automatically opened.

During automatic opening of the first door 30A, the refrigerator may identify an opening angle of the first door 30A based on position information received from the position sensor 150 (2027), and may compare the identified opening angle of the first door 30A with a target angle.

The refrigerator may identify whether the identified opening angle of the first door 30A has reached the target angle (2028).

The refrigerator may control the door opening device 100 to stop operating based on the identified opening angle of the first door 30A reaching the target angle.

The refrigerator may control the driving motor so that the driving motor in the door opening device 100 rotates in the second rotation direction based on the identified opening angle of the first door 30A reaching the target angle. Accordingly, the door pusher 120 may move from the second position to the first position (2029).

The refrigerator may output guidance information informing automatic opening of the first door through at least one of the display 332a or the speaker 332b.

The refrigerator may measure an open time of the automatically opened first door 30A, and may output an opening alert of the first door 30A through at least one of the display 332a or the speaker 332b based on the measured open time reaching a preset time.

The refrigerator may identify whether the first door 30A is in a closed state or an open state based on the first detection information received from the first opening and closing sensor 310, and may display guidance information guiding the closed state of the first door 30A via the display 332a based on the first door 30A being in a closed state.

When a touch signal is received and the second door is identified as being in an open state in a state where the first door is in a closed state, the refrigerator may control at least one of the touch sensor 200 or the door opening device 100 to be deactivated.

The refrigerator causes the door pusher to be maintained at the first position by deactivating at least one of the touch sensor 200 or the door opening device 100 (2030).

Controlling deactivation of the door opening device may include controlling the door opening device 100 not to operate to prevent the first door 30A from being automatically opened based on receiving a touch signal from the touch sensor 200.

The touch signal received from the touch sensor 200 may include a signal corresponding to capacitance greater than or equal to a reference capacitance.

Controlling deactivation of the door opening device may include not transmitting a control signal to the door opening device 100 to prevent the first door 30A from being automatically opened based on receiving the touch signal from the touch sensor 200.

The refrigerator may control the display to display information about an automatically non-openable state of the first door, or may control the speaker.

As such, in the embodiment, when the second door is transitioned from a closed state to an open state, the received touch signal may be identifiedas an interference signal caused by the second door 30C, thereby preventing the first door 30A from being automatically opened.

The refrigerator measures an open time from when the state is transitioned based on the second door 30C being identified to have transitioned from a closed state to an open state (2031), and compares the measured time with a reference time.

The refrigerator may maintain a position of the door pusher at the first position based on the measured time being less than the reference time.

The refrigerator may control the door pusher to be moveable (2033), based on the measured time reaching the reference time (2032).

That is, the refrigerator may control at least one of the touch sensor or the door opening device to be activated.

The refrigerator may output information about an automatically openable state of the first door through the display or the speaker.

When a touch signal is received from the touch sensor in a state where the door pusher is moveable (2034), the refrigerator may control the door opening device to automatically open the first door. The refrigerator may cause the door pusher to move from the first position to the second position by rotation of the driving motor (2035). The reference time may be a time during which the wall portion 52 of the handle area of the second door 30C deviates from the position where the wall portion 52 is vertically arranged with the touch sensor 200 of the first door 30A. The reference time may be pre-stored information obtained through experiment.

When the opening angle of the second door 30C increases as the open time of the second door 30C elapses and the wall portion 52 of the handle area of the second door deviates from the area adjacent to the touch sensor 200, the refrigerator may control the door opening device 100 to automatically open the first door 30A based on the touch signal received from the touch sensor 200 even in a state where the second door 30C is opened.

When the first door is in an open state, the refrigerator may identify whether the first door 30A is transitioned from an open state to a closed state based on the first detection information received from the first opening and closing sensor 310, may initialize the measured open time based on the first door 30A being identified to have transitioned from an open state to a closed state, may control at least one of the display 332a or the speaker 332b to stop outputting the opening alert of the first door 30A, and may control the display 332a to display guidance information guiding the closed state of the first door 30A.

When the second door is in an open state, the refrigerator may identify whether the second door 30C is transitioned from an open state to a closed state based on the second detection information received from the second opening and closing sensor 320, and may output guidance information guiding the closed state of the second door 30C via the display 332a based on the second door 30C being identified to have transitioned from an open state to a closed state.

Meanwhile, the disclosed embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium.

The computer-readable recording medium may include all kinds of recording media storing instructions that can be interpreted by a computer. For example, the computer-readable recording medium may be read only memory (ROM), random access memory (RAM), a magnetic tape, a magnetic disc, a flash memory, an optical data storage device, etc.

Although the embodiments of the disclosure have been provided for illustrative purposes, the scope of the disclosure is limited to the embodiments of the disclosure. One or more embodiments that may be modified and altered by those skilled in the art without departing from the principles and spirit of the disclosure, the scope of which is defined in the claims, should be construed as falling within the scope of the disclosure.

## Claims

1. A refrigerator, comprising:
a main body comprising a storage compartment;
a first door provided on the main body;
a touch sensor disposed on a lower end of the first door and configured to receive a touch input from a user;
a door opening device including a door pusher movable between a first position and a second position, and allow the first door to be opened by moving to the second position;
a second door provided on the main body and disposed below the first door;
a first opening and closing sensor configured to detect an open state and a closed state of the first door;
a second opening and closing sensor configured to detect an open state and a closed state of the second door; and
a processor configured to:
identify a state of the first door and a state of the second door based on first detection information received from the first opening and closing sensor and second detection information received from the second opening and closing sensor in response to receiving a touch signal from the touch sensor, and
control the door opening device to maintain the door pusher at the first position based on the first door being in the closed state and the second door being in the open state.

2. The refrigerator of claim 1, wherein the processor is configured to control the door opening device to move the door pusher to the second position, based on the first door being the closed state and the second door being the closed state.

3. The refrigerator of claim 2, further comprising:
a position sensor configured to detect an opening angle of the first door,
wherein the processor is configured to:
identify the opening angle of the first door based on position information received from the position sensor, and control the door pusher to stop moving based on the identified opening angle of the first door reaching a target angle, and
based on the identified opening angle of the first door reaching the target angle, control the door opening device to move the door pusher to the second position, and control the door opening device to move the door pusher to the first position.

4. The refrigerator of claim 1, wherein the processor is configured to:
measure an open time of the second door based on the second door being in the open state;
based on the touch signal being received from the touch sensor while the measured open time is less than a reference time, control the door opening device to maintain the door pusher at the first position;
control the door pusher to be moveable based on the measured open time reaching the reference time; and
based on the touch signal being received from the touch sensor while the measured open time reaches the reference time, control the door opening device to move the door pusher to the second position.

5. The refrigerator of claim 4, wherein the processor is configured to:
monitor the state of the second door based on the second detection information received from the second opening and closing sensor;
based on the monitored state of the second door being the open state, control the door opening device to maintain the door pusher at the first position; and
based on the monitored state of the second door being the closed state, control the door pusher to be moveable.

6. The refrigerator of claim 1, wherein:
the second door comprises a handle area provided on an upper end side of the second door,
the handle area comprises a groove portion recessed downward from the upper end side of the second door, and a wall portion forming a wall surface of the groove portion,
the groove portion is positioned on the upper end side of the second door to face the touch sensor of the first door based on the first door and the second door being in the closed state,
the wall portion is positioned on the upper end side of the second door to face the touch sensor based on the first door being in the closed state and the second door transitioning from the closed state to the open state, and
the touch sensor comprises a capacitance sensor configured to detect capacitance.

7. The refrigerator of claim 6, wherein the wall portion of the upper end side of the second door is made of a conductive material.

8. The refrigerator of claim 1, further comprising:
a display configured to display information about an automatically openable state and an automatically non-openable state of the first door.

9. A method for controlling a refrigerator, the method comprising:
based on receiving a touch signal from a touch sensor disposed on a first door, identifying whether the first door is in an open state or a closed state based on first detection information received from a first opening and closing sensor;
identifying whether a second door disposed below the first door is in an open state or a closed state based on second detection information received from a second opening and closing sensor;
based on the first door being in the closed state and the second door being in the closed state, controlling a door opening device to move a door pusher from a first position to a second position; and
based on the first door being in the closed state and the second door being in the open state, controlling the door opening device to maintain the door pusher at the first position.

10. The method of claim 9, wherein the controlling the door opening device to move the door pusher from the first position to the second position comprises:
controlling a driving motor connected to the door pusher to allow a rotational force of the driving motor to be transmitted to the door pusher.

11. The method of claim 10, wherein the controlling of the door opening device comprises:
identifying an opening angle of the first door based on position information received from a position sensor; and
based on the identified opening angle of the first door reaching a target angle, moving the door pusher toward the first position.

12. The method of claim 9, further comprising:
measuring an open time of the second door based on the identified second door being in the open state; and
controlling the door pusher to be moveable based on the measured open time reaching a reference time.

13. The method of claim 12, wherein the controlling of the door pusher to be moveable comprises: based on the receiving the touch signal from the touch sensor, moving the door pusher from the first position to the second position.

14. The method of claim 12, further comprising:
based on the receiving the touch signal from the touch sensor while the measured open time is less than the reference time, maintaining the door pusher at the first position .

15. The method of claim 9, further comprising:
monitoring a state of the second door based on the second detection information received from the second opening and closing sensor;
based on the monitored state of the second door being the open state, controlling the door pusher to be maintained at the first position ; and
based on the monitored state of the second door being the closed state, controlling the door pusher to be moveable.
